# EUROPÄISCHE PATENTSCHRIFT

(11) **EP 4 250 636 B1**
(45) Veröffentlichungstag und Bekanntmachung des Hinweises auf die Patenterteilung: **03.09.2025**
(21) Anmeldenummer: 23170433.9
(22) Anmeldetag: 14.07.2010
(51) Int. Cl.: G06F 21/33, G06F 21/00, H04L 9/32, H04L 9/40, G06F 21/41

(54) **VERFAHREN ZUR HSM MIGRATION**
METHOD FOR HSM MIGRATION
PROCÉDÉ DE MIGRATION POUR MODULES MATÉRIELS DE SÉCURITÉ (HSM)

(30) Priorität: 15.07.2009 DE 102009027747; 29.07.2009 DE 102009028064; 16.06.2010 DE 102010030167
(43) Veröffentlichungstag der Anmeldung: 27.09.2023
(62) Teilanmeldung aus: 10730489.1
(73) Patentinhaber: Bundesdruckerei GmbH, 10969 Berlin (DE)
(72) Erfinder: WEIß, Niklas, 12489 Berlin (DE)
(74) Vertreter: Richardt Patentanwälte PartG mbB

(56) Entgegenhaltungen:
- EP-A1- 1 632 871
- WO-A1-2006/067503
- JIM TURNBULL: "Cross-Certification and PKI Policy Networking", CROSS-CERTIFICATION AND PKI POLICY NETWORKING, ENTRUST, US, no. Version 1.0, 1 August 2000 (2000-08-01), pages 1 - 11, XP007914924
- WIKIPEDIA: "Hardware security module", INTERNET CITATION, 10 July 2009 (2009-07-10), pages 1 - 3, XP007914926, Retrieved from the Internet <URL:http://en.wikipedia.org/w/index.php?title=Hardware_security_module&ol did=301365097> [retrieved on 20100916]
- BSI: "Technische Richtlinie eID-Server", TECHNISCHE RICHTLINIE EID-SERVER, BUNDESAMT FÜR SICHERHEIT IN DER INFORMATIONSTECHNIK, BONN, vol. BSI TR-03130, no. Version 1.0 RC1, 19 May 2009 (2009-05-19), pages 1 - 48, XP002598177
- SCHULZE UWE ET AL: "Des anderen Last - Load Balancing beschleunigt Server-Anwendungen; Balanceakt - Software für Load-Sharing- und Failover-Cluster", MAGASIN IX EXTRA - NETWORKING SCHWERPUNKT: LOAD BALANCING, DE, no. IX extra, 1 September 2008 (2008-09-01), pages I - XII, XP007914908
- PERLMAN R: "An Overview of P K I Trust Models", IEEE NETWORK, IEEE SERVICE CENTER, NEW YORK, NY, US, 1 November 1999 (1999-11-01), pages 38 - 43, XP007914923, ISSN: 0890-8044
- KOMAR B: "Re: Certificate Authority (CA) Failover - Possible?", INTERNET CITATION, 25 February 2006 (2006-02-25), pages 1, XP007915749, Retrieved from the Internet <URL:http://www.derkeiler.com/Newsgroups/microsoft.public.win2000.security /2006-02/msg00127.html> [retrieved on 20100101]

## Beschreibung

Die Erfindung betrifft ein Verfahren zur HSM Migration sowie ein Verfahren zum Lesen von zumindest einem Attribut aus einem ID-Token, ein Computerprogrammprodukt, einen ID-Token sowie ein Computersystem.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

Die Erfindung geht als nächstliegendem Stand der Technik von DE 602 19 350 T2 aus, die in ihrem Absatz [0009] ein Verfahren zum Ersetzen eines Schlüsselsatzes auf höchster Ebene in eine HSM beschreibt, wobei eine Verwendung des aktuell aktiven Schlüssels nicht erforderlich ist.

Der Erfindung liegt demgegenüber die Aufgabe zugrunde, ein verbessertes Verfahren zur HSM Migration, sowie ein Verfahren zum Lesen zumindest eines Attributs zu schaffen, sowie ein entsprechendes Computerprogrammprodukt, einen ID-Token und ein Computersystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Erste Ausführungsformen der Erfindung beinhalten ein Verfahren zur Migration von einem ersten HSM zu einem zweiten HSM, wobei dem ersten HSM ein erstes asymmetrisches kryptographisches Schlüsselpaar mit einem ersten privaten und einem ersten öffentlichen Schlüssel und ein erstes den ersten öffentlichen Schlüssel beinhaltendes Zertifikat zugeordnet ist, mit folgenden Schritten:
- Erzeugung eines zweiten asymmetrischen kryptographischen Schlüsselpaars mit einem zweiten privaten und einem zweiten öffentlichen Schlüssel sowie eines zweiten Zertifikates, welches den zweiten öffentlichen Schlüssel beinhaltet, durch das zweite HSM,
- Senden des zweiten Zertifikates mit dem zweiten öffentlichen Schlüssel von dem zweiten HSM an das erste HSM, und
- Erzeugung eines dritten Zertifikats durch das erste HSM durch Signieren des zweiten öffentlichen Schlüssels mit dem ersten privaten Schlüssel, wobei eine Zertifikatsprüfung des zweiten Zertifikats mittels einer Zertifikatskette, die das erste und dritte Zertifikat enthält, durchführbar ist.

Nach Ausführungsformen der Erfindung sind das erste Zertifikat und das dritte Zertifikat beide Bestandteil der selben Zertifikatskette, die für die Zertifikatskettenprüfung verwendet wird.

Das erste Zertifikat kann dabei die Funktion des Wurzelzertifikates besitzen. Das so generierte dritte Zertifikat kann im Anschluss daran z.B. an das Computersystem B und bzw. oder einen Zertifikatsserver übertragen werden. Das dritte Zertifikat muss sich innerhalb einer Zertifikatskette zu dem Wurzelzertifikat des ersten Zertifikats befinden. Falls sich die Zertifikate dieser Kette nicht bereits auf dem Computersystem B oder dem Verzeichnisserver befinden, muss das dritte Zertifikat deshalb zusammen mit einer bisher bestehenden Zertifikatskette vom ersten Zertifikat bis zum Root-Zertifikat des ersten Zertifikats an die Zielinstanz, z.B. das Computersystem B oder den Verzeichnisserver, übertragen werden.

Unter einem "HSM" , d.h. einem Hardware Security Module oder Hardware-Sicherheitsmodul (HSM) wird hier insbesondere ein (internes oder externes) Peripheriegerät für die effiziente und sichere Ausführung kryptographischer Operationen verstanden. Ein HSM ermöglicht es, die Vertrauenswürdigkeit und die Integrität von Daten und den damit verbundenen Informationen insbesondere in IT-Systemen sicherzustellen. Um die Vertrauenswürdigkeit zu gewährleisten, sollen die zum Einsatz kommenden kryptographischen Schlüssel sowohl softwaretechnisch als auch gegen physikalische Angriffe oder Seitenkanalangriffe geschützt werden. Ein Computersystem kann auch insgesamt als HSM ausgebildet sein.

Ein HSM kann mehrere "slots" aufweisen, um kryptographisches Schlüsselmaterial zu speichern. Jeder der slots hat die Funktionalität eines separaten HSM. Die slots werden auch als "partition" bezeichnet.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen.

Bei einem "Root-Zertifikat" handelt es sich um ein Zertifikat, welches einer Wurzelzertifizierungsinstanz (Root-CA) des asymmetrischen Kryptosystems zugeordnet ist. Ein solches Root-Zertifikat wird auch als self-signed certificate bezeichnet. Im Unterschied zu einem Root-Zertifikat ist ein "Link-Zertifikat", welches auch als sog. "Cross-Zertifikat" bezeichnet wird, nicht von derselben Instanz signiert, deren Identität es zugeordnet ist.

Bei dem o.g. Verfahren geht es insbesondere um eine Migration eines Hardwaresicherheitsmoduls (HSM), das bei einem Zertifizierungsdiensteanbieter (ZDA) eingesetzt ist, bzw. einer den HSM treibenden Software, wobei die alten ausgerollten Zertifikate bzw. Identitätsdokumente prüfbar bleiben, obwohl der private Schlüssel des alten HSM nicht zugänglich ist.

Wesentlich für die Funktionalität eines HSM ist die Unzugänglichkeit seines privaten Schlüssels, da dieser zum Schaffen einer Vertrauensstellung zwischen Kommunikationspartnern verwendet wird. Der Schutz des privaten Schlüssels geht so weit, dass das HSM bei dem Versuch den privaten Schlüssel auszulesen, sich selbst zerstört oder zumindest derart zurücksetzt, dass der private Schlüssel unwiederbringlich gelöscht wird.

Dies bereitet Probleme bei einer Migration von einer bestehenden ZDA-Infrastruktur mit HSM und zugeordneter Software entweder auf ein neues HSM oder bei einem Wechsel zu einem anderen HSM- und/oder Software-Vendor, da der private Schlüssel auch nicht für den Administrator auslesbar ist. Dieses Problem wird beispielsweise auch in allen Ländern auftreten, die nach der EAC-Spezifikation (Extended Access Control) der ICAO (International Civil Aviation Organization) biometrische Daten in Identitätsdokumenten vorschreiben und zu einem späteren Zeitpunkt ihr HSM auf eine andere Version oder einen anderen Vendor umstellen wollen.

Die hier beschriebene Problemlösung beschreibt ein Verfahren zur Migration eines HSM, ohne dass der private Schlüssel des HSM ausgelesen zu werden braucht. Die Lösung wird nach ersten Ausführungsformen der Erfindung dadurch erreicht, dass in einem einmaligen Migrationsschritt das neue HSM ein zweites Zertifikat, z.B. ein Root-Zertifikat des neuen HSM an das alte HSM sendet. Alternativ kann das gesendete zweite Zertifikat auch ein beliebiges n-tes, dem Root-Zertifikat des neuen HSM innerhalb einer Zertifikatshierarchie an der n-ten Stelle dieser Hierarchie untergeordnetes Zertifikat sein, welches durch eine zusammenhängende Zertifikatskette mit dem Root-Zertifikat des neuen HSM verbunden ist. Das gesendete zweite Zertifikat beinhaltet auch den diesem zweiten Zertifikat zugehörigen zweiten öffentlichen Schlüssel. Das alte HSM empfängt das zweite Zertifikat und signiert den öffentlichen Schlüssel des empfangenen zweiten Zertifikates mit dem ersten privaten Schlüssel des alten HSM. Dadurch wird ein drittes Zertifikat erzeugt, welches die Funktion eines "Cross-Zertifikats" oder "Link-Zertifikats" einnimmt. Das so erstellte dritte Zertifikat wird mitsamt des signierten öffentlichen Schlüssels zurück an das Computersystem B übertragen. Nach bevorzugten Ausführungsformen beinhaltet das auf dem alten HSM erstellte dritte Zertifikat als ausstellende Instanz den Aussteller des Root-Zertifikates des alten HSM und als Zertifikatsinhaber die dem neuen HSM zugehörige Instanz. Das erzeugte dritte Zertifikat fungiert also als Link-Zertifikat, welches von dem Root-Zertifikat oder einem n-ten Zertifikat des alten HSM auf das Root-Zertifikat oder ein m-tes Zertifikat des neuen HSMs verweist.

Zertifikatsketten geben das Vertrauen, welches eine Instanz, z.B. ein Nutzer, in z.B. ein Root-Zertifikat hegt ("Vertrauensanker"), in vertikaler Richtung an alle Zertifikate weiter, welche mit dem Root-Zertifikat eine Zertifikatskette bilden. Link-Zertifikate schaffen dagegen Vertrauen in horizontaler Richtung zwischen zwei unabhängigen PKI Systemen bzw. zwei unabhängigen Root-Zertifikaten. Ausführungsformen des erfindungsgemäßen Verfahrens zur HSM-Migration mittels Link-Zertifikaten sind in mehrerer Hinsicht vorteilhaft. Zum einen ist das Migrationsverfahren vorteilhaft, um die Sicherheit und Verfügbarkeit der durch das alte HSM vermittelten PKI zu gewährleisten, sollte beispielsweise die Lebenszeit des Speichers des alten HSM überschritten sein oder sollte ein Update bzw. Wechsel der Software oder HSM Hardware notwendig sein. Zum anderen ist das beschriebene Verfahren zur HSM Migration auch vorteilhaft, da es die Verwendung von Link-Zertifikaten ermöglicht, auch den Zertifizierungsalgorithmus zu wechseln, ohne dass die bestehenden Zertifikate ungültig werden. Durch kontinuierliche Leistungssteigerung der Hardware und Software sinkt mit der Zeit die Sicherheit, die durch verschiedene kryptographische Verfahren, die bei der Erstellung der Zertifikate zum Einsatz kommen. Üblicherweise haben Zertifikate daher eine begrenzte Gültigkeitsdauer von einigen wenigen Jahren. Sind auf dem neuen HSM beispielsweise neue, verbesserte und sicherere kryptographische Algorithmen zur Zertifikatserstellung implementiert, so ist es durch die Verwendung von Link-Zertifikaten möglich, diese verbesserten Verfahren zu nutzen, ohne dass die bestehenden und sich im Umlauf befindlichen Zertifikate ungültig werden.

Falls es sich bei dem zweiten Zertifikat um ein Root-Zertifikat, d.h. um ein selbstsigniertes Wurzelzertifikat handelt, so enthält dieses neben dem zugehörigen zweiten öffentlichen Schlüssel auch eine mit dem zweiten privaten Schlüssel erstellte Signatur. Falls es sich bei dem zweiten Zertifikat um ein n-tes Zertifikat innerhalb einer Zertifikatshierarchie handelt, so wurde dieses i.d.R. mit einem dem n-1ten Zertifikat zugeordneten privaten Schlüssels signiert. Sofern es sich bei dem zweiten Zertifikat um kein Root-Zertifikat handelt ist das zweite Zertifikat mittels einer Zertifikatskette im Zuge einer Zertifikatskettenprüfung prüfbar, wobei die Zertifikatskette das Root Zertifikat des zweiten HSM enthält. Je nach Länge der Zertifikatskette kann die zur Prüfung des zweiten Zertifikats verwendete Zertifikatskette auch weitere Zertifikate, die von dem Root Zertifikat abgeleitet sind, enthalten.

Die Übermittlung des zweiten Zertifikates vom neuen HSM an das alte HSM kann auf verschiedenen Wegen erfolgen. Neben dem manuellen Übertragen des zweiten Zertifikates auf einen Datenträger, z.B. USB-Stick, CD-ROM, Speicher einer Smart-Card etc. kann die Übertragung auch über ein Netzwerk, z.B. das Internet oder ein Intranet erfolgen. Dabei muss jedoch die Sicherheit der Datenübertragung, insbesondere die Integrität des übertragenen zweiten Zertifikates gewährleistet sein und sog. "man-in-the-middle attacks" müssen wirkungsvoll ausgeschlossen werden. Dies kann z.B. durch den Aufbau eines sicheren, i.d.R. verschlüsselten Kommunikationskanals zwischen dem alten und dem neuen HSM erfolgen. Die Sicherheit kann z.B. durch Benutzung eines gemeinsamen Geheimnisses des alten und neuen HSM erfolgen, wobei dieses Geheimnis z.B. auf einem anderen Kommunikationskanal, z.B. vermittels durch einen menschlichen Boten, übermittelt werden kann. Die Zertifikatsübermittlung kann auch z.B. mittels einer VPN (Virtual Private Network) Kommunikationsschnittstelle erfolgen. Alternativ oder zusätzlich kann auch die Eingabe biometrischer Daten des Operators vor der Zertifikatsübertragung erforderlich sein. Nach einer bevorzugten Ausführungsform wird das zweite Zertifikat in Form einer Zertifikatsdatei an das alte HSM übertragen.

Nach weiteren ersten Ausführungsformen der Erfindung ist das HSM-Migrationsverfahren so ausgebildet, dass die gesamte Zertifikatskette des alten HSM bis hinab zu dem erzeugten dritten Zertifikat, welches die Funktion eines Cross- / bzw. Link-Zertifikates erfüllt, auf das Computersystem B oder einen Verzeichnisserver übertragen wird. Erste Ausführungsformen des erfindungsgemäßen Verfahrens zur Migration eines HSM haben also zur Voraussetzung, dass eine Zertifikatsprüfung des zweiten Zertifikats mittels einer Zertifikatskette, die das erste und dritte Zertifikat enthält, durchführbar ist. Auf diese Weise ist das neue HSM in der Lage, beim ZDA gegenüber den ausgerollten Identitätsdokumenten derart aufzutreten, dass der Prüfvorgang der ausgerollten Identitätsdokumente wie vor der Migration abläuft, ohne dass irgendeine zwischengeschaltete Instanz von der Migration betroffen wäre.

Das zweite Zertifikat ist also mittels einer ersten Zertifikatkette prüfbar, welche das erste und das dritte Zertifikat enthält. Sofern es sich bei dem zweiten Zertifikat nicht um ein Root-Zertifikat handelt, ist das zweite Zertifikat zudem mittels einer zweiten Zertifikatskette prüfbar, welche das Root-Zertifikat des zweiten HSM enthält. Je nach Länge der zweiten Zertifikatskette kann die zweite Kette noch zusätzliche Zertifikate enthalten, welche sich von dem Root-Zertifikat des zweiten HSM ableiten.

In der DE 602 19 350 T2 wird ein anderes Problem gelöst. Es wird dort das Problem gelöst, dass ein Schlüsselpaar genutzt wird und aus Sicht des Clients auch weiter genutzt werden soll, wobei trotzdem das HSM gewechselt werden soll. Auf das hier erfindungsgemäß beschriebene Szenario übertragen bedeutet dies, dass das ISS (Inspection System Server) im Besitz des privaten Root-Schlüssels wäre und das Identitätsdokument prüfen würde, ob das ISS den privaten Schlüssel des Vertrauensankers im Identitätsdokument besitzt. Ein erfindungsgemäßes ISS wird im weitern auch als ersten Computersystem, Ersatz-Computersystem oder ID-Provider-Computersystem bezeichnet.

Dies macht das Identitätsdokument erfindungsgemäß aber nicht, sondern es verlangt vielmehr, dass das ISS einen privaten Schlüssel zu einem Zertifikat besitzt, welches sich in einer Zertifikatskette bis zum Root-Zertifikat befindet und sich vom Identitätsdokument auch über die Signaturprüfungen der einzelnen Zertifikate prüfen lässt. Hier ist das Schlüsselpaar des Root-Zertifikats selber nicht relevant. Gemäß Ausführungsformen der vorliegenden Erfindung werden keine Informationen von privaten Schlüsseln mittels Transportschlüssel auf das andere HSM übertragen.

Nach einer Ausführungsform der Erfindung erfolgt die Migration von dem ersten HSM zu dem zweiten HSM deutlich vor dem zu erwartenden Ende der Lebensdauer des ersten HSM. Dadurch soll sichergestellt werden, dass bei einem Ausfall des ersten HSM aufgrund des Erreichens von dessen Lebensdauer der von dem ersten Computersystem angebotene Dienst mit dem zweiten HSM nahtlos weitergeführt werden kann.

Nach einer Ausführungsform der Erfindung wird zusätzlich zu dem ersten Computersystem mit dem ersten HSM ein Ersatz-Computersystem mit dem zweiten HSM betrieben, wobei das Ersatz-Computersystem prinzipiell gleich wie das erste Computersystem aufgebaut ist. Bei einem Verlust des ersten Computersystems kann das Ersatz-Computersystem die Funktion des ersten Computersystems übernehmen. Das Ersatz-Computersystem bildet also einen "Backup" für das erste Computersystem zur Schaffung von Ausfallsicherheit. Vorzugsweise wird das Ersatz-Computersystem räumlich getrennt von dem ersten Computersystem aufgestellt.

Ausführungsformen der Erfindung sind auf eine Migration zwischen HSM's gerichtet. Ein Problem dabei ist, dass der private Schlüssel einer Software, es ist eine Certificate Authority Software, im folgenden CA genannt, der deren Zertifizierungsleistung erst ermöglicht, auslesegeschützt in einem HSM oder einer Chipkarte enthalten ist. Ein weiteres Problem ist, dass die Zertifizierungsleistung, die die abzulösende Software mit der abzulösenden Software mit dem abzulösenden HSM bzw. der abzulösenden Chipkarte erbringt, aufrecht erhalten werden muss, was nur mit dem privaten Schlüssel der abzulösenden Software aus dem abzulösenden HSM / der abzulösenden Chipkarte möglich ist. Mit dieser Erfindung wird eine Migration ermöglicht, die einen kontinuierlichen Betrieb bereits ausgerollter Komponenten ermöglicht. Die privaten Schlüssel der abzulösenden CA können nach der Migration gefahrlos gelöscht werden und die Hardware kann anderer Verwendung zugeführt werden.

Für eine HSM- und / oder HSM-SW-Migration sind zwei Punkte nach Ausführungsformen der Erfindung wesentlich:
1. Migration von einem bestehenden System mit einer alten CA und einem alten HSM zu einer neuen CA mit einem neuen HSM.
2. Betrieb der neuen CA mit dem neuen HSM
zu 1.:
1. Zunächst wird gemäß ersten Ausführungsformen der Erfindung eine neue CA mit einem neuen HSM eingerichtet. Anschließend wird die Migration von der alten CA mit dem alten HSM zur neuen CA mit dem neuen HSM eingeleitet durch die Übertragung des zweiten Zertifikates, welches einen zweiten öffentlichen Schlüssel, d.h. pub[HSM neu], beinhaltet, an das alte HSM..

Das alte HSM signiert den erhaltenen öffentlichen Schlüssel pub[HSM-neu] des erhaltenen zweiten Zertifikates mit seinem alten privaten Schlüssel, um ein Link-Zertifikat (drittes Zertifikat) zu bilden: LinkCert=sig(pub[HSM-neu]) erstellt mit dem privaten Schlüssel des alten HSMs.

Schließlich sendet die alte CA an die neue CA dann das Link-Zertifikat Link-Cert=sig(pub[HSM-neu]) wobei zur Signatur der private Schlüssel des alten HSMs genutzt wird. Weiterhin wird die bisher bestehende Zertifikatskette des alten HSMs an das neue HSM (über die jeweilige CA Software) geschickt.

Das alte HSM kann dann abgeschaltet werden.

### zu 2.:

Ein Inspection System Server (im Folgenden ISS genannt) sendet an das neue HSM einen Zertifikats-Request mit dem öffentlichen Schlüssel des ISS (pub[ISS]).

Die neue CA mit dem neuen HSM signiert diesen öffentlichen Schlüssel pub[ISS] dann mit seinem privaten Schlüssel priv[HSM-neu] um ein Zertifikat zu bilden: sig(pub[ISS]) unter Verwendung des privaten Schlüssels der neuen CA mit dem neuen HSM). Diese Signatur kann vom ISS mit dem von der alten CA mit dem HSM ausgestellten Link-Zertifikat (drittes Zertifikat) verifiziert werden. Um das Link-Zertifikat zu verifizieren sind unter Umständen weitere Link-Zertifikate notwendig und das ursprüngliche Root Zertifikat. Diese Zertifikate stammen ebenfalls von der alten CA und dem alten HSM und wurden im Rahmen der Migration in die neue CA und in das neue HSM importiert.

Insgesamt erhält der ISS dann eine Zertifikatkette mit
1. dem ISS Zertifikat mit dem von der neuen CA signierten öffentlichen Schlüssel des aktuellen ISS Schlüsselpaares
2. dem modifizierten Link-Zertifikat mit dem von der alten CA und dem alten HSM signierten öffentlichen Schlüssel der neuen CA und dem neuen HSM
3. evtl. weiteren Link-Zertifikaten der alten CA und dem alten HSM
4. dem Root-Zertifikat der alten CA und dem alten HSM.

Ein ID-Token, wie z.B. eine elektronische Vorrichtung, die für die Zwecke einer elektronischen Identitätsbestätigung gemäß an sich bekannter Schaltungstechnik hergerichtet ist, wie z.B. ein elektronisches Identitätsdokument, z.B. ein elektronischer Pass, gegenüber welchen sich das ISS authentifizieren muss, erhält schließlich diese Zertifikatskette (mit Ausnahme des Root Zertifikates, welches als Vertrauensanker schon beim Personalisieren in den Pass eingebracht wurde). Beim Überprüfen kann der Pass feststellen, ob das ISS eine Vertrauensstellung zum neuen HSM hat und, ob das die neue CA mit dem neuen HSM eine Vertrauensstellung zur alten CA mit dem alten HSM hat. Sofern diese Vertrauenskette gegeben ist, gibt der Pass vertrauliche(re) Daten wie beispielsweise Fingerprints an das ISS frei.

Nach dem bisherigen Stand der Technik ist ein Wechsel der HSM-Hardware z. B. auf einen anderen Hersteller nicht möglich. Es muss für die gesamte Lebensdauer der Pässe mit dem Root-Zertifikat des alten HSM diese Infrastruktur vorgehalten werden. Die Hersteller behalten sich außerdem vor, bei größeren Firmware-Updates sämtliche HSM Daten zu löschen. Bei Major-Updates kann es außerdem sein, dass sich interne Firmware-Strukturen ändern und die Daten, selbst wenn sie durch ein Backup gesichert wurden, nicht mehr einspielbar sind. Vorteil des Verfahrens ist, dass alte CAs mit alten HSM's mit grundsätzlich nicht zugänglichen privaten Schlüsseln abgelöst werden können, ohne dass alle im Umlauf befindlichen Pässe plötzlich ungültig werden. Ferner ist eine Interoperabilität dergestalt ermöglicht, dass auch ein Vendor-Wechsel zwischen verschiedenen HSM's erfolgen kann. Mit dieser Erfindung kann man zu jedem beliebigen Zeitpunkt die Hardware auch herstellerübergreifend wechseln.

Ausführungsformen der Erfindung lösen insbesondere die Aufgabe, eine bereits gelieferte CA-Software, mit der auch Pässe personalisiert werden, zu einem beliebigen späteren Zeitpunkt durch eine (noch nicht existente) neue CA-Software zu ersetzen und mit Zertifikaten dieser neuen CA die mit Zertifikaten der alten CA personalisierten Pässe weiterhin auslesen zu können.

Nach Ausführungsformen der Erfindung wird ein Verfahren zum Lesen zumindest eines in einem ID-Token gespeicherten Attributs geschaffen, wobei der ID-Token einem Nutzer zugeordnet ist. Das Verfahren beinhaltet die folgenden Schritte: Authentifizierung des Nutzers gegenüber dem ID-Token; Authentifizierung eines ersten Computersystems gegenüber dem ID-Token; nach erfolgreicher Authentifizierung des Nutzers und des ersten Computersystems gegenüber dem ID-Token, Lesezugriff des ersten Computersystems auf das zumindest eine in dem ID-Token gespeicherte Attribut zur Übertragung des zumindest einen Attributs an ein zweites Computersystem. Hierdurch kann ein "Vertrauensanker" geschaffen werden. Das erste Computersystem beinhaltet das erste bzw. nach Migration das zweite HSM, welches für die Authentifizierung eines ersten Computersystems gegenüber dem ID-Token und für die Signierung des zumindest einen Attributs verwendet wird. Bei dem ersten Computersystem kann es sich auch um das Ersatz-Computersystem handeln.

Ausführungsformen der Erfindung ermöglichen das Lesen eines oder mehrerer der in einem ID-Token gespeicherten Attribute durch das erste Computersystem, wobei die Verbindung zwischen dem ID-Token und dem ersten Computersystem über ein Netzwerk, insbesondere das Internet, aufgebaut werden kann. Bei dem zumindest einem Attribut kann es sich um eine Angabe bezüglich der Identität des dem ID-Token zugeordneten Nutzers handeln, insbesondere bezüglich dessen so genannter digitaler Identität. Beispielsweise werden durch das erste Computersystem die Attribute Name, Vorname, Adresse gelesen, um diese Attribute an ein zweites Computersystem, zum Beispiel eines Online-Dienstes, weiterzuleiten.

Es kann aber zum Beispiel auch nur ein einzelnes Attribut gelesen werden, welches nicht zur Feststellung der Identität des Nutzers, sondern beispielsweise zur Überprüfung der Berechtigung des Benutzers zur Inanspruchnahme eines bestimmten Online-Dienstes dient, wie zum Beispiel das Alter des Nutzers, wenn dieser einen Online-Dienst in Anspruch nehmen möchte, der einer bestimmten Altersgruppe vorbehalten ist, oder ein anderes Attribut, welches die Zugehörigkeit des Nutzers zu einer bestimmten Gruppe dokumentiert, welche zur Nutzung des Online-Dienstes berechtigt ist.

Bei dem ID-Token kann es sich um ein tragbares elektronisches Gerät, wie zum Beispiel einen so genannten USB-Stick, handeln oder um ein Dokument, insbesondere ein Wert- oder Sicherheitsdokument.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung des zumindest einen Attributs integriert ist.

Ausführungsformen der Erfindung sind also besonders vorteilhaft, da das zumindest eine Attribut aus einem besonders vertrauenswürdigen Dokument, beispielsweise einem amtlichen Dokument, ausgelesen wird. Von besonderem Vorteil ist weiterhin, dass eine zentrale Speicherung der Attribute nicht erforderlich ist. Ausführungsformen der Erfindung ermöglichen also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Nach einer Ausführungsform der Erfindung hat das erste Computersystem zumindest ein Zertifikat, welches zur Authentifizierung des ersten Computersystems gegenüber dem ID-Token verwendet wird. Das Zertifikat beinhaltet eine Angabe derjenigen Attribute, für welche das erste Computersystem eine Leseberechtigung hat. Der ID-Token prüft anhand dieses Zertifikats, ob das erste Computersystem die erforderliche Leseberechtigung für den Lesezugriff auf das Attribut hat, bevor ein solcher Lesezugriff durch das erste Computersystem durchgeführt werden kann.

Nach einer Ausführungsform der Erfindung sendet das erste Computersystem das zumindest eine von dem ID-Token ausgelesene Attribut unmittelbar an ein zweites Computersystem. Bei dem zweiten Computersystem kann es sich zum Beispiel um einen Server zur Erbringung eines Online-Dienstes oder eines sonstigen Dienstes, wie zum Beispiel einer Bankdienstleistung oder zur Bestellung eines Produkts handeln. Beispielsweise kann der Nutzer ein Konto online eröffnen, wozu Attribute, die die Identität des Nutzers beinhalten, von dem ersten Computersystem an das zweite Computersystem einer Bank übertragen werden.

Nach einer Ausführungsform der Erfindung erfolgt die Übertragung der aus dem ID-Token gelesenen Attribute von dem ersten Computersystem zunächst an ein drittes Computersystem des Nutzers. Beispielsweise hat das dritte Computersystem einen üblichen Internetbrowser, mit dem der Nutzer eine Webseite des zweiten Computersystems öffnen kann. Der Nutzer kann in die Webseite eine Anforderung oder Bestellung für einen Dienst oder ein Produkt eingeben.

Das zweite Computersystem spezifiziert daraufhin diejenigen Attribute, zum Beispiel des Nutzers oder seines ID-Tokens, welche es für die Erbringung des Dienstes oder die Annahme der Bestellung benötigt. Die entsprechende Attributspezifikation, die die Spezifizierung dieser Attribute beinhaltet, wird sodann von dem zweiten Computersystem an das erste Computersystem gesendet. Dies kann mit oder ohne Zwischenschaltung des dritten Computersystems erfolgen. Im letzteren Fall kann der Nutzer das gewünschte erste Computersystem gegenüber dem zweiten Computersystem spezifizieren, beispielsweise durch Eingabe der URL des ersten Computersystems in eine Webseite des zweiten Computersystems von dem dritten Computersystem aus.

Nach einer Ausführungsform der Erfindung beinhaltet die Dienst-Anforderung des Nutzers an das zweite Computersystem die Angabe eines Identifikators, wobei der Identifikator das erste Computersystem identifiziert. Beispielsweise handelt es sich bei dem Identifikator um einen Link, beispielsweise eine URL des ersten Computersystems.

Nach einer Ausführungsform der Erfindung wird die Attributspezifizierung nicht unmittelbar von dem zweiten Computersystem an das erste Computersystem gesendet, sondern zunächst von dem zweiten Computersystem an das dritte Computersystem. Das dritte Computersystem hat mehrere vordefinierte Konfigurationsdatensätze, wobei der dritte Computer mehrere vordefinierte Konfigurationsdatensätze aufweist, wobei jeder der Konfigurationsdatensätze eine Teilmenge der Attribute, zumindest eine Datenquelle und ein erstes Computersystem aus einer Menge von ersten Computersystemen spezifiziert, wobei die Attributspezifikation von dem zweiten Computersystem zunächst an das dritte Computersystem übertragen wird, sodass mittels des dritten Computersystems zumindest einer der Konfigurationsdatensätze auswählt wird, der eine Teilmenge der Attribute spezifiziert, welche das zumindest eine in der Attributspezifikation spezifizierte Attribut beinhaltet, und wobei der dritte Computer die Attributspezifikation an das erste Computersystem weiterleitet, und die Verbindung mit dem durch die Angabe der Datenquelle in dem ausgewählten Konfigurationsdatensatz spezifizierten ID-Token aufgebaut wird.

Nach einer Ausführungsform der Erfindung werden die aus dem ID-Token ausgelesenen Attribute von dem ersten Computersystem signiert und dann an das dritte Computersystem übertragen. Der Nutzer des dritten Computersystems kann die Attribute also lesen, ohne sie jedoch verändern zu können. Erst nach Freigabe durch den Nutzer werden die Attribute von dem dritten Computersystem an das zweite Computersystem weitergeleitet.

Nach einer Ausführungsform der Erfindung kann der Nutzer die Attribute vor deren Weiterleitung durch weitere Daten ergänzen.

Nach einer Ausführungsform der Erfindung hat das erste Computersystem mehrere Zertifikate mit verschiedenen Leserechten. Aufgrund des Empfangs der Attributspezifikation wählt das erste Computersystem eines oder mehrere dieser Zertifikate aus, um die entsprechenden Attribute aus dem ID-Token oder mehreren verschiedenen ID-Token auszulesen.

Nach einer Ausführungsform der Erfindung hat das dritte Computersystem zumindest einen Konfigurationsdatensatz, welcher eine externe Datenquelle zur Abfrage eines weiteren Attributs von dem dritten Computersystem über das Netzwerk spezifiziert.

Nach einer Ausführungsform der Erfindung erfolgt die Abfrage des weiteren Attributs, nachdem das zumindest eine Attribut aus dem ID-Token ausgelesen worden ist, und nachdem das dritte Computersystem das zumindest eine Attribut von dem ersten Computersystem empfangen hat, wobei die Abfrage das zumindest eine Attribut beinhaltet.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens.

In einem weiteren Aspekt betrifft die Erfindung einen ID-Token mit einem geschützten Speicherbereich zur Speicherung von zumindest einem Attribut, mit Mitteln zur Authentifizierung eines dem ID-Token zugeordneten Nutzers gegenüber dem ID-Token, Mitteln zur Authentifizierung eines ersten Computersystems gegenüber dem ID-Token, Mitteln zum Aufbau einer geschützten Verbindung zu dem ersten Computersystem, über die das erste Computersystem das zumindest eine Attribut auslesen kann, wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist.

Zusätzlich zu der Authentifizierung des ersten Computersystems gegenüber dem ID-Token, wie sie an sich zum Beispiel als so genannte Extended Access Control für maschinenlesbare Reisedokumente (machine-readable travel documents - MRTD) bekannt und von der internationalen Luftfahrtbehörde ICAO spezifiziert ist, muss sich also der Nutzer gegenüber dem ID-Token authentifizieren. Beispielsweise wird durch eine erfolgreiche Authentifizierung des Nutzers gegenüber dem ID-Token dieser freigeschaltet, sodass die weiteren Schritte, nämlich die Authentifizierung des ersten Computersystems gegenüber dem ID-Token und/oder der Aufbau einer geschützten Verbindung zum Auslesen der Attribute, ablaufen können.

Nach einer Ausführungsform der Erfindung hat der ID-Token Mittel für eine Ende-zu-Ende-Verschlüsselung. Dies ermöglicht es, die Verbindung zwischen dem ID-Token und dem ersten Computersystem über ein drittes Computersystem des Nutzers aufzubauen, da der Nutzer aufgrund der Ende-zu-Ende-Verschlüsselung keine Änderungen der über die Verbindung übertragenen Daten vornehmen kann.

In einem weiteren Aspekt betrifft die Erfindung ein Computersystem mit einem ersten HSM und einem zweiten HSM, wobei dem ersten HSM ein erstes asymmetrisches kryptografisches Schlüsselpaar mit einem ersten privaten und einem ersten öffentlichen Schlüssel und ein erstes, den ersten öffentlichen Schlüssel beinhaltendes Zertifikat zugeordnet sind, und wobei dem zweiten HSM ein zweites asymmetrisches kryptografisches Schlüsselpaar mit einem zweiten privaten und einem zweiten öffentlichen Schlüssel und einem zugehörigen zweiten Zertifikat zugeordnet ist, und wobei dem zweiten HSM ein drittes Zertifikat zugeordnet ist, welches durch das erste HSM dadurch generiert wurde, dass der zweite öffentliche Schlüssel des zweiten Zertifikats mit dem ersten privaten Schlüssel durch das erste HSM signiert wurde. Bei den ersten und zweiten HSMs kann es sich um verschiedene Slots desselben HSM handeln oder um zwei separate HSMs.

Beispielsweise befindet sich das erste HSM in einem ersten Computersystem A und das zweite HSM in einem ersten Computersystem B. Das erste Computersystem B kann für einen so genannten "Cold-Standby" vorgesehen sein, das heißt als Ersatz-Computersystem für das erste Computersystem A, wenn dieses ausfällt. Das Computersystem beinhaltet also in diesem Fall die ersten Computersysteme A und B.

Nach einer Ausführungsform der Erfindung hat das Computersystem Mittel zur Sensierung eines Ausfalls des ersten HSMs bzw. des ersten Computersystems A, zu dem das erste HSM gehört, und Mittel zum Umschalten auf das zweite HSM bzw. das erste Computersystem B, zu dem das zweite HSM gehört. Hierdurch wird ein so genannter "Hot-Standby" Betrieb ermöglicht. Die Umschaltung von dem ersten Computersystem A auf das erste Computersystem B kann also innerhalb kürzester Zeit, beispielsweise im Bereich von Millisekunden, erfolgen, nachdem der Ausfall des ersten Computersystems A sensiert worden ist.

Nach einer Ausführungsform der Erfindung sind die Mittel zur Sensierung zur Prüfung einer Time-Out-Bedingung ausgebildet. Beispielsweise wird durch die Mittel zur Sensierung überwacht, ob das Computersystem A bzw. das erste HSM auf eine Anforderung innerhalb einer vorgegebenen Zeit antwortet. Wenn dies nicht der Fall ist, so ist die Time-Out-Bedingung nicht erfüllt, sodass auf das Computersystem B umgeschaltet wird, und die Anforderung erneut an das Computersystem B gesendet wird.

Nach einer Ausführungsform der Erfindung hat das Computersystem Mittel zur Last-Verteilung zwischen zumindest den Computersystemen A und B. Dies hat den Vorteil, dass die Computersysteme A und B sowie im Bedarfsfall weitere prinzipiell gleich aufgebaute erste Computersysteme für die Verarbeitung von Anforderungen eingesetzt werden, sodass eine entsprechende große Anzahl solcher Anforderungen pro Zeiteinheit durch die parallel arbeitenden Computersysteme A, B, ... abgearbeitet werden können.

Nach einer Ausführungsform der Erfindung sind die Mittel zur Last-Verteilung zur Bestimmung eines Last-Parameters für jedes der Computersysteme A, B, ... ausgebildet. Bei diesen Last-Parametern kann es sich um die Länge einer Warteschlange von zu verarbeitenden Anforderungen des betreffenden ersten Computersystems handeln, die aktuelle Auslastung des Prozessors des betreffenden ersten Computersystems oder einen anderen geeigneten Last-Parameter. Die Mittel zur Last-Verteilung sind dann so ausgebildet, dass zusätzlich an das Computersystem gerichtete Anforderungen so auf die ersten Computersysteme A, B, ... verteilt werden, dass sich die Werte der Last-Parameter der ersten Computersysteme aneinander angleichen.

In einem weiteren Aspekt betrifft die Erfindung ein erstes Computersystem mit Computersystem mit Mitteln zum Empfang einer Attributspezifikation über ein Netzwerk, wobei die Attributspezifikation zumindest ein Attribut spezifiziert, Mitteln zur Authentifizierung gegenüber einem ID-Token, Mitteln zum Lesen zumindest einen Attributs aus dem ID-Token über eine gesicherte Verbindung, wobei das Lesen des zumindest einen Attributs voraussetzt, dass sich ein dem ID-Token zugeordneter Nutzer gegenüber dem ID-Token authentifiziert hat.

Nach einer Ausführungsform der Erfindung kann das erste Computersystem Mittel zur Generierung einer Aufforderung an den Benutzer beinhalten. Nachdem das erste Computersystem die Attributspezifikation beispielsweise von dem zweiten Computersystem empfangen hat, sendet es daraufhin eine Aufforderung an das dritte Computersystem des Nutzers, sodass der Nutzer dazu aufgefordert wird, sich gegenüber dem ID-Token zu authentifizieren. Nachdem die Authentifizierung des Nutzers gegenüber dem ID-Token erfolgreich durchgeführt worden ist, erhält das erste Computersystem von dem dritten Computersystem eine Bestätigung. Daraufhin authentifiziert sich das erste Computersystem gegenüber dem ID-Token und es wird eine sichere Verbindung zwischen dem ID-Token und dem ersten Computersystem mit einer Ende-zu-Ende-Verschlüsselung aufgebaut.

Nach einer Ausführungsform der Erfindung hat das erste Computersystem mehrere Zertifikate, die jeweils unterschiedliche Leserechte spezifizieren. Nach Empfang der Attributspezifikation wählt das erste Computersystem zumindest eines dieser Zertifikate mit den zum Lesen der spezifizierten Attribute ausreichenden Leserechten.

Nach einer Ausführungsform löst die vorliegende Erfindung das folgende Problem: Nach einem Ausfall eines Hardware Sicherheitsmoduls (HSM), auf dem das private Schlüsselmaterial einer Root Certificate Authority (Root-CA) für Identitäts-, Wert- oder Sicherheitsdokumente, im folgenden einfach als Sicherheitsdokumente bezeichnet, gespeichert ist, müssten alle Sicherheitsdokumente ausgetauscht werden, da deren Echtheit nur mittels der Root-CA festgestellt werden kann. Dies kann im Falle landesweit ausgegebener Sicherheitsdokumente zu einem hohen Kostenausfall führen.

Hintergrund ist, dass für diese Feststellung der Echtheit oder die Authentifizierung es auf den Sicherheitsdokumenten ein Card-Verifiable-Zertifikat (CV-Zertifikat) gibt, das in letzter Instanz von der Root Certificate Authority (Root-CA) abhängt. Alle Hersteller von Sicherheitsdokumenten müssen sich daher auf die Root-CA beziehen, wenn sie CV-Zertifikate auf den Karten anbringen.

Neben der Authentifizierung ist die Root-CA auch für den Einzug von Karten (Revocation Service) wichtig. Öffentliche und private Schlüssel können beispielsweise von dem Hochsicherheitsmodul (HSM) erzeugt und gespeichert werden.

Es wird daher nach einer Ausführungsform vorgeschlagen, rechtzeitig vor einem erwarteten Ausfall des HSM, beispielsweise auf der Grundlage der MTBF-(Mean Time Before Failure)-Angaben des Herstellers, eine Backup-Root-CA mit eigenem HSM aufzusetzen. Dies erfolgt vorteilhaft, indem der öffentliche Schlüssel der Backup-Root-CA von der Produktiv-Root-CA signiert wird, und zwar mit dem privaten Schlüssel der Produktiv-Root-CA. In einer Zertifikatskette vom zu prüfenden Sicherheitsdokument über verschiedene CA's hinweg bis zu einer Root-CA ist dann auch die Backup-Root-CA in der Lage, als Root-CA zu arbeiten. Die bisherige Produktiv-Root-CA kann dann abgeschaltet werden oder die Backup-Root-CA kann als sogenanntes "Hot-Standby" arbeiten, um eine hohe Verfügbarkeit bereitzustellen.

Ausführungsformen des erfindungsgemäßen ersten Computersystems sind besonders vorteilhaft, da sie in Kombination mit der Notwendigkeit der Authentifizierung des Nutzers gegenüber dem ID-Token einen Vertrauensanker für die unverfälschte digitale Identität des Nutzers bilden. Hierbei ist von besonderem Vorteil, dass dies keine vorherige Registrierung des Nutzers gegenüber dem Computersystem erfordert sowie auch keine zentrale Speicherung der die digitalen Identitäten bildenden Attribute der Nutzer.

Nach einer Ausführungsform der Erfindung empfängt das erste Computersystem zusammen mit der Attributspezifikation einen Identifikator des zweiten Computersystems. Mit Hilfe des Identifikators identifiziert das Computersystem das zweite Computersystem, welches die Identifikationsdienste in Anspruch nehmen möchte, um diese Dienstleistung gegenüber dem zweiten Computersystem zu vergebühren.

Nach einer Ausführungsform der Erfindung handelt es sich bei dem ersten Computersystem um ein behördlich zertifiziertes Trust-Center, insbesondere ein Signaturgesetz-konformes Trust-Center.

Ausführungsformen der Erfindung stellen somit insbesondere im streng regulierten Umfeld eines Trustcenters einen Vorteil bereit, da der Schritt des Erzeugens und Transportierens einer Anforderung zur Zertifikatserstellung (dieses Transportieren muss in einem Trustcenter gemäß Stand der Technik manuell erfolgen) auf dem ersten HSM sowie Rücktransport zum zweiten HSM eingespart wird: Es reicht nun ein Transportieren eines Zertifikats des zweiten HSM zum Unterschreiben durch das erste HSM sowie Rücktransport zum zweiten HSM aus, so dass eine deutliche Vereinfachung bereitgestellt wird und das bereits erzeugte Zertifikat des zweiten HSM direkt weiter genutzt wird.

Nach zweiten Ausführungsformen der Erfindung wird der zweite öffentliche Schlüssel von dem zweiten HSM an das erste HSM nicht notwendigerweise als Bestandteil eines Zertifikates übertragen. Die Übertragung des zweiten Schlüssels kann gemäß der zweiten Ausführungsformen z.B. in Form einer Datei, die nur den zweiten öffentlichen Schlüssel beinhaltet, übertragen werden.

Zweite Ausführungsformen der Erfindung stellen ein Verfahren zur Migration von einem ersten HSM zu einem zweiten HSM bereit, gemäß welchem dem ersten HSM ein erstes asymmetrisches kryptographisches Schlüsselpaar mit einem ersten privaten und einem ersten öffentlichen Schlüssel und ein erstes den ersten öffentlichen Schlüssel beinhaltendes Zertifikat zugeordnet ist, wobei das Verfahren die folgenden Schritte umfasst:
- Erzeugung eines zweiten asymmetrischen kryptographischen Schlüsselpaars mit einem zweiten privaten und einem zweiten öffentlichen Schlüssel durch das zweite HSM,
- Senden einer Anforderung mit dem zweiten öffentlichen Schlüssel von dem zweiten HSM an das erste HSM,
- Erzeugung eines zweiten Zertifikats von dem ersten HSM durch Signieren des zweiten öffentlichen Schlüssels mit dem ersten privaten Schlüssel, wobei mit Hilfe des zweiten Zertifikats und des ersten Zertifikats eine Zertifikatskettenprüfung durchführbar ist.

Nach zweiten Ausführungsformen der Erfindung sind dabei das erste Zertifikat und das zweite Zertifikat beide Bestandteil der selben Zertifikatskette, die für die Zertifikatskettenprüfung verwendet wird. Eine Zertifikatskettenprüfung kann z.B. anlässlich der Prüfung einer digitalen Signatur erfolgen.

In einem weiteren Aspekt betreffen zweite Ausführungsformen der Erfindung ein Verfahren zum Lesen zumindest eines in einem ID-Token gespeicherten Attributs, wobei der ID-Token einem Nutzer zugeordnet ist, mit folgenden Schritten:
- Authentifizierung des Nutzers gegenüber dem ID-Token,
- Authentifizierung eines ersten Computersystems gegenüber dem ID-Token,
nach erfolgreicher Authentifizierung des Nutzers und des ersten Computersystems gegenüber dem ID-Token, Lesezugriff des ersten Computersystems auf das zumindest eine in dem ID-Token gespeicherte Attribut zur Übertragung des zumindest einen Attributs nach dessen Signierung an ein zweites Computersystem, wobei das erste Computersystem das erste HSM bzw. das zweite HSM beinhaltet, nachdem eine Migration nach einer zweiten Ausführungsform des HSM Migrationsverfahrens durchgeführt worden ist, wobei die Authentifizierung mit Hilfe des HSM durchgeführt wird.

In einem weiteren Aspekt betreffen zweite Ausführungsformen der Erfindung ein Computerprogrammprodukt mit von einem Computersystem ausführbaren Instruktionen zur Durchführung eines Verfahrens nach einer der vorhergehenden zweiten Ausführungsformen des erfindungsgemäßen Verfahrens.

In einem weiteren Aspekt betreffen zweite Ausführungsformen der Erfindung ein Computersystem mit einem ersten und einem zweiten HSM, wobei dem ersten HSM ein erstes asymmetrisches kryptografisches Schlüsselpaar mit einem ersten privaten und einem ersten öffentlichen Schlüssel und ein erstes, den ersten öffentlichen Schlüssel beinhaltendes Zertifikat zugeordnet sind, wobei dem zweiten HSM ein zweites asymmetrisches kryptografisches Schlüsselpaar mit einem zweiten privaten und einem zweiten öffentlichen Schlüssel und ein zweites, den zweiten öffentlichen Schlüssel beinhaltendes Zertifikat zugeordnet sind, und wobei das zweite Zertifikat dabei den mit dem ersten privaten Schlüssel signierten zweiten öffentlichen Schlüssel beinhaltet.

Im Weiteren werden Ausführungsformen der Erfindung mit Bezugnahme auf die Zeichnungen näher erläutert. Es zeigen:
- Figur 1: ein Blockdiagramm einer Ausführungsform erfindungsgemäßer Computersysteme,
- Figur 2: ein Flussdiagramm einer Ausführungsform eines erfindungsgemäßen Verfahrens,
- Figur 3: ein Blockdiagramm einer Ausführungsform erfindungsgemäßer Computersysteme mit Hot-Standby-Funktionalität,
- Figur 4: ein Blockdiagramm einer Ausführungsform erfindungsgemäßer Computersysteme mit einer Load-Balancing-Funktionalität,
- Figur 5: ein Blockdiagramm einer Ausführungsform erfindungsgemäßer Computersysteme,
- Figur 6: ein Flussdiagramm einer Ausführungsform eines erfindungsgemäßen Verfahrens,
- Figur 7: ein Blockdiagramm weiterer Ausführungsformen erfindungsgemäßer Computersysteme,
- Figur 8: ein UML-Diagramm einer weiteren Ausführungsform eines erfindungsgemäßen Verfahrens,
- Figur 9: die Übertragung des erstellten eines Link-Zertifikates zusammen mit der Zertifikatskette des Computersystems A an das Computersystem B.

Elemente der nachfolgenden Ausführungsformen, die einander entsprechen, werden mit denselben Bezugszeichen gekennzeichnet.

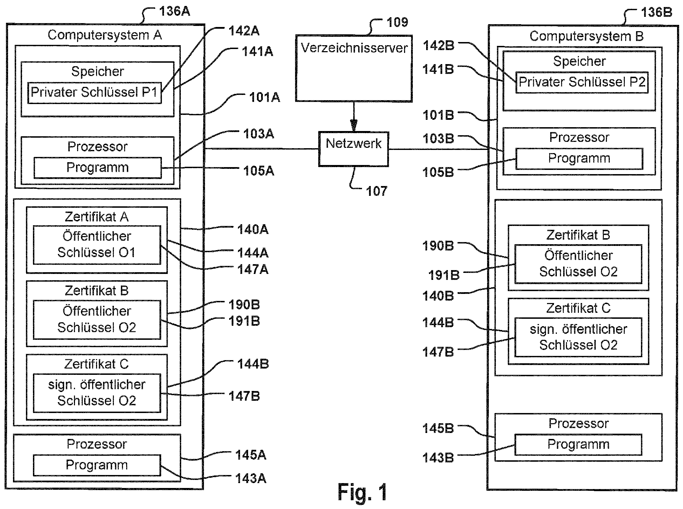

Die Figur 1 zeigt ein erstes Computersystem A, welches als ISS oder als ID-Provider Computersystem ausgebildet sein kann. Das Computersystem A beinhaltet ein HSM 101A, welches einen geschützten Speicherbereich 141A aufweist, in dem ein privater Schlüssel P1 gespeichert ist. Das HSM 101A hat ferner einen Prozessor 103A zur Ausführung von Programminstruktionen 105A.

Das Computersystem A hat ferner einen Speicher 140A, in dem ein Zertifikat 144A gespeichert sein kann. Das Zertifikat 144A beinhaltet einen öffentlichen Schlüssel O1, der dem privaten Schlüssel P1 zugeordnet ist. Die Schlüssel P1 und O1 bilden also ein asymmetrisches kryptografisches Schlüsselpaar einer PKI.

Das Computersystem A hat ferner einen Prozessor 145A zur Ausführung von Programminstruktionen 143A, durch welche beispielsweise ein Anwendungsprogramm realisiert sein kann.

Ferner wird ein weiteres erstes Computersystem B zur Verfügung gestellt, welches prinzipiell gleich aufgebaut sein kann, wie das Computersystem A. Das HSM 101B des Computersystems B ist zunächst noch unbenutzt und in dem geschützten Speicherbereich 141B des HSM 101B ist zunächst kein Schlüssel gespeichert.

Zur Migration von dem Computersystem A mit seinem HSM 101A zu dem Computersystem B mit seinem HSM 101B kann gemäß ersten Ausführungsformen der Erfindung wie folgt vorgegangen werden:
Zunächst wird durch Ausführung der Programminstruktionen 105B seitens des HSM 101B des Computersystems B ein neues kryptografisches Root-Schlüsselpaar erzeugt, nämlich der zweite private Schlüssel P2 und der zweite öffentliche Schlüssel O2. Zudem erzeugt HSM 101 B des Computersystems B ein dem generierten zweiten Schlüsselpaar zugehöriges zweites Zertifikat 190B. Der private Schlüssel P2 wird in dem geschützten Speicherbereich 141B gespeichert. Der öffentliche Schlüssel O2 und das zugehörige zweite Zertifikat, welches den zweiten öffentlichen Schlüssel beinhaltet, werden von dem Computersystem B an das Computersystem A übertragen. Dies kann über ein Netzwerk 107 oder eine andere Art der Datenverbindung erfolgen.

Der öffentliche Schlüssel O2 wird in das HSM 101A des Computersystems A zusammen mit dem zweiten Zertifikat übertragen. Daraufhin wird durch Ausführung der Programminstruktionen 105A der öffentliche Schlüssel O2 mit dem privaten Schlüssel P1 signiert, um ein entsprechendes drittes Zertifikat 144B zu erzeugen. Bei diesem dritten Zertifikat 144B handelt es sich um ein Link-Zertifikat zu dem ersten Zertifikat 144A, sodass das dritte Zertifikat 144B für eine Zertifikatskettenprüfung eingesetzt werden kann, wobei das erste Zertifikat 144A das Vorgänger-Zertifikat in der Zertifikatskette zu dem Root-Zertifikat der PKI ist.

Das dritte Zertifikat 144B wird dann z.B. über das Netzwerk 107 von dem Computersystem A auf das Computersystem B übertragen und dort in dem Speicher 140B abgespeichert. Zusätzlich können auch das erste Zertifikat 144A sowie weitere, unter Umständen seitens des Computersystems A gespeicherte Link-Zertifikate der Zertifikatskette zu dem Root-Zertifikat von dem Computersystem A an das Computersystem B übertragen werden, um diese in den Speicher 140B zu speichern.

Alternativ oder zusätzlich kann ein Verzeichnisserver 109 zur Speicherung der Zertifikate der Zertifikatskette vorgesehen sein. In diesem Fall kann das erste Zertifikat 144A in dem Verzeichnisserver 109 gespeichert sein. Das dritte Zertifikat 144B wird nach dessen Generierung durch das Computersystem A beispielsweise über das Netzwerk 107 auf den Verzeichnisserver 109 hoch geladen, sodass es dort allgemein verfügbar ist.

Nach der Erzeugung des dritten Zertifikats 144B und dessen Übertragung auf Computersystem B ist das Computersystem B für einen Betrieb als ISS bzw. ID-Provider Computersystem einsatzbereit. Das Computersystem B kann für einen so genannten Cold-Standby-Betrieb als Ersatz für das Computersystem A bereitgehalten werden, um an die Stelle des Computersystems A zu treten, sobald dieses ausfällt. Es kann auch so vorgegangen werden, dass das Computersystem A vor Ablauf seiner zur erwartenden Lebensdauer durch das Computersystem B ersetzt wird.

Nach zweiten Ausführungsformen der Erfindung wird zur Migration von dem Computersystem A mit seinem HSM 101A zu dem Computersystem B mit seinem HSM 101B wie folgt vorgegangen:
Zunächst wird durch Ausführung von Programminstruktionen 105B seitens des HSM 101B des Computersystems B ein neues kryptografisches Schlüsselpaar erzeugt, nämlich der private Schlüssel P2 und der öffentliche Schlüssel O2. Der private Schlüssel P2 wird in dem geschützten Speicherbereich 141B gespeichert. Der öffentliche Schlüssel O2 wird von dem Computersystem B an das Computersystem A übertragen, wobei das zweite Computersystem kein zweites Zertifikat erstellt und wobei der zweite öffentliche Schlüssels nicht als Bestandteil des zweiten Zertifikates übertragen wird. Die Übertragung des zweiten öffentlichen Schlüssels kann über ein Netzwerk 107 oder eine andere Art der Datenverbindung erfolgen.

Der öffentliche Schlüssel O2 wird in einem weiteren Schritt in das HSM 101A des Computersystems A eingegeben. Daraufhin wird durch Ausführung der Programminstruktionen 105A der öffentliche Schlüssel O2 mit dem privaten Schlüssel P1 signiert, um ein zweites Zertifikat zu erzeugen. Bei diesem zweiten Zertifikat handelt es sich um ein Link-Zertifikat zu dem ersten Zertifikat, sodass das zweite Zertifikat für eine Zertifikatskettenprüfung eingesetzt werden kann, wobei das erste Zertifikat das Vorgänger-Zertifikat in der Zertifikatskette zu dem Root-Zertifikat der PKI ist.

Das gemäß den zweiten Ausführungsformen der Erfindung erzeugte zweite Zertifikat wird dann z.B. über das Netzwerk 107 von dem Computersystem A auf das Computersystem B übertragen und dort in dem Speicher 140B abgespeichert. Zusätzlich können auch das erste Zertifikat sowie weitere, unter Umständen seitens des Computersystems A gespeicherte Link-Zertifikate der Zertifikatskette zu dem Root-Zertifikat von dem Computersystem A an das Computersystem B übertragen werden, um diese in den Speicher 140B zu speichern.

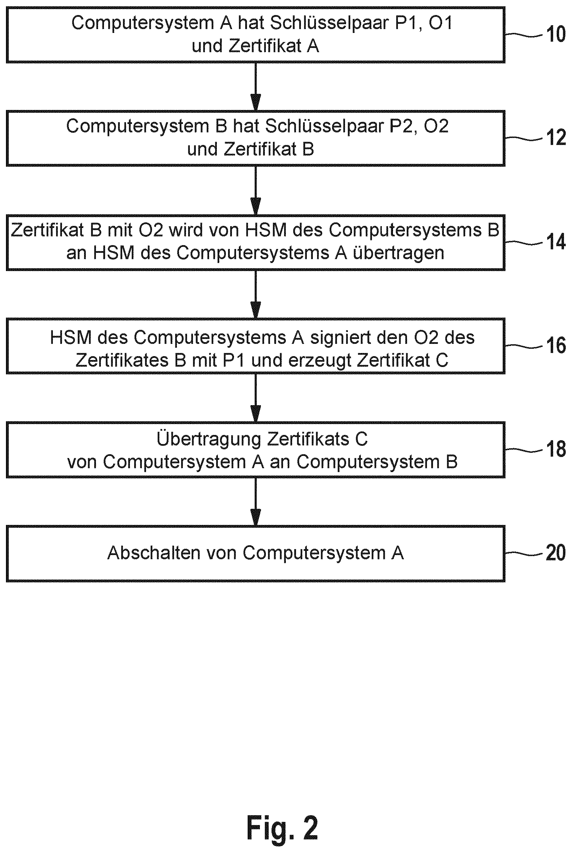

Die Figur 2 zeigt ein entsprechendes Flussdiagramm einer ersten Ausführungsform des erfindungsgemäßen Verfahrens.

Bei Inbetriebnahme des Computersystems A hat dieses ein erstes asymmetrisches kryptografisches Schüsselpaar bestehend aus dem Schlüssel P1 und dem öffentlichen Schlüssel O1, wobei der öffentliche Schlüssel O1 in dem Zertifikat A der PKI beinhaltet ist (Schritt 10). Das neue HSM des Computersystems B erstellt, falls noch nicht auf dem neuen HSB vorhanden, ein zweites asymmetrisches kryptografisches Schüsselpaar bestehend aus dem zweiten privaten Schlüssel P2 und dem zweiten öffentlichen Schlüssel O2, wobei neben dem zweiten asymmetrischen Schlüsselpaar auch ein zweites Zertifikat 190B erzeugt wird, welches den zweiten öffentlichen Schlüssel O2 beinhaltet (Schritt 12). In dem Schritt 14 sendet das Computersystem B das zweite Zertifikat zusammen mit dessen zweiten öffentlichen Schlüssel O2 an das Computersystem A. Daraufhin erzeugt das HSM des Computersystems A in dem Schritt 16 ein drittes Zertifikat C für das Schlüsselpaar P2, O2, indem es den öffentlichen Schlüssel O2 mit seinem privaten Schlüssel P1 signiert.

In dem Schritt 18 wird das dritte Zertifikat C sowie ggf. weitere Zertifikate einer Zertifikatskette zu einem Root-Zertifikat der PKI von dem Computersystem A an das Computersystem B übertragen. Alternativ oder zusätzlich werden diese Zertifikate in einem Verzeichnisserver gespeichert.

In dem Schritt 20 kann dann das Computersystem B an die Stelle des Computersystems A treten und das Computersystem A kann abgeschaltet werden.

Statt einer Migration von dem Computersystem A zu dem Computersystem B kann auch lediglich eine Migration von dem HSM 101A zu dem HSM 101B stattfinden, wobei das HSM 101A und das HSM 101B zu demselben ersten Computersystem gehören. Beispielsweise handelt es sich bei dem HSM 101A und dem HSM 101B um verschiedene Slots desselben HSM.

Der Anlass für eine Migration von dem ersten HSM 101A zu dem zweiten HSM 101B kann auch sein, dass z.B. das Programm 143A durch ein neues Programm ersetzt wird, welches andere Datenstrukturen voraussetzt. Die Migration muss also nicht zwingend mit einer Veränderung der Hardware einhergehen.

Bei den hier betrachteten Ausführungsformen handelt es sich z.B. um ein Zwei-Schichten-Systeme. Es sind aber auch Ausführungsformen mit mehr als zwei Schichten möglich, insbesondere ein n-Schichten-System, wobei n jede beliebige natürliche Zahl sein kann. Insbesondere kann die Zertifikatskette eine Document Verifying Certificate Authority (DVCA) beinhalten.

Nach einer weiteren Ausführungsform sind die Computersysteme A und B insgesamt als HSMs ausgebildet.

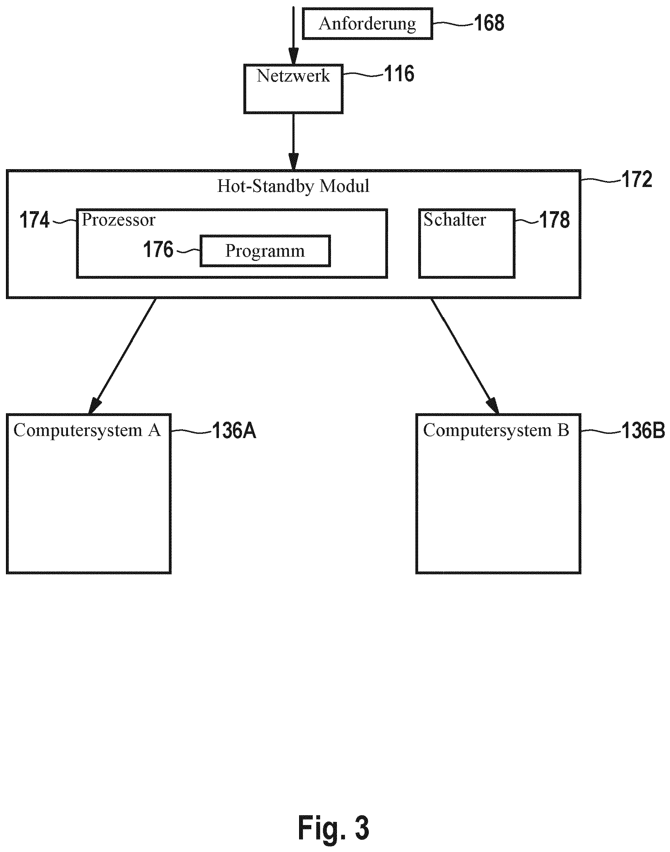

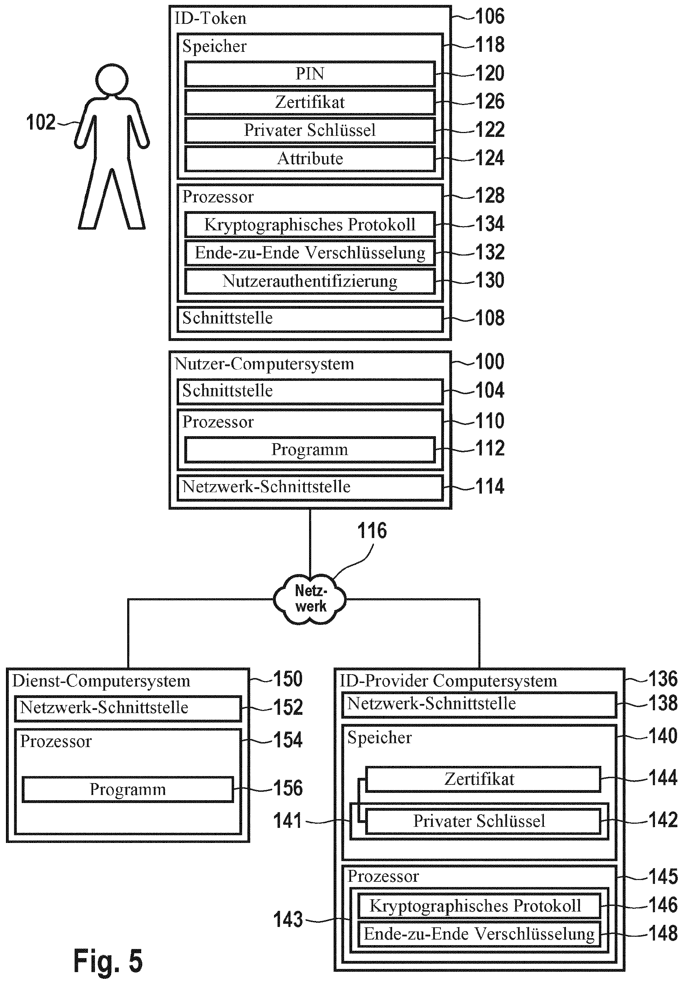

Die Figur 3 zeigt eine Ausführungsform der Erfindung, bei der die Computersysteme A und B in einem sogenannten Hot-Standby-Betrieb betrieben werden können. Hierzu sind die Computersysteme A und B über ein Hot-Standby-Modul 172 mit einem Netzwerk 116 verbunden, über das z. B. eine Anforderung 168 zur Erbringung einer kryptografischen Dienstleistung, wie z.B. der Erzeugung einer Signatur, der Prüfung einer Signatur oder für das Auslesen von Attributen aus einem ID-Token (vgl. hierzu die Ausführungsformen der Figuren 5 bis 8) empfangen werden kann.

Das Hot-Standby-Modul 172 beinhaltet einen Prozessor 174 zur Ausführung von Programminstruktionen 176 und einen Schalter 178, der hardware- und/oder softwaretechnisch realisiert sein kann. Bei dem Schalter 178 kann es sich um einen sogenannten Koppelknoten, insbesondere einen Switch handeln. Das Hot-Standby-Modul 172 kann so ausgebildet sein, dass hieran neben dem Computersystem A und B weitere entsprechende Computersysteme angeschlossen werden können.

Durch Ausführung der Programminstruktionen 176 wird durch das Hot-Standby-Modul 172 sensiert, ob das Computersystem A in Betrieb ist, oder ausgefallen ist. Solange das Computersystem A nicht ausgefallen ist, ist der Schalter 178 so geschaltet, dass die Anforderungen, die über das Netzwerk 116 empfangen werden, an das Computersystem A zur Verarbeitung weitergeleitet werden, insbesondere auch die Anforderung 168. Sobald durch das Hot-Standby-Modul 172 sensiert wird, dass das Computersystem A ausgefallen ist, wird durch Ausführung der Programminstruktionen 176 ein Schaltsignal generiert, sodass der Schalter 178 umschaltet, und sodass die im Weiteren über das Netzwerk 116 empfangenen Anforderungen nicht mehr an das Computersystem A, sondern an das Computersystem B weitergeleitet werden.

Die Programminstruktionen 176 können so ausgebildet sein, dass diese eine Time-Out-Bedingung überprüfen, um festzustellen, ob das Computersystem A noch im Betrieb ist. Beispielsweise wird hierzu mit der Weiterleitung der Anforderung 168 über den Schalter 178 an das Computersystem A ein Timer gestartet. Wenn das Computersystem A auf die Anforderung 168 innerhalb einer vorgegebenen Zeit antwortet, so bedeutet dies, dass das Computersystem A in Betrieb ist. Antwortet das Computersystem A hingegen nicht innerhalb des vorgegebenen Zeitintervalls auf die Anforderung 168, so bedeutet dies, dass das Computersystem A nicht mehr korrekt arbeitet. Es wird dann durch Ausführung der Programminstruktionen 176 das Schaltsignal zum Umschalten des Schalters 178 generiert.

Das Hot-Standby-Modul 172 kann einen Pufferspeicher beinhalten, in dem die zuletzt an das Computersystem A weitergeleiteten Anforderungen in Kopie gespeichert sind. Sobald eine in dem Pufferspeicher gespeicherte Anforderung von dem Computersystem A abgearbeitet worden ist, wird diese Anforderung aus dem Pufferspeicher gelöscht. Sobald ein Ausfall des Computersystems A sensiert wird, werden die in dem Pufferspeicher gespeicherten Anforderungen erneut weitergeleitet, und zwar dann an das Computersystem B, damit diese Anforderungen nicht verloren gehen.

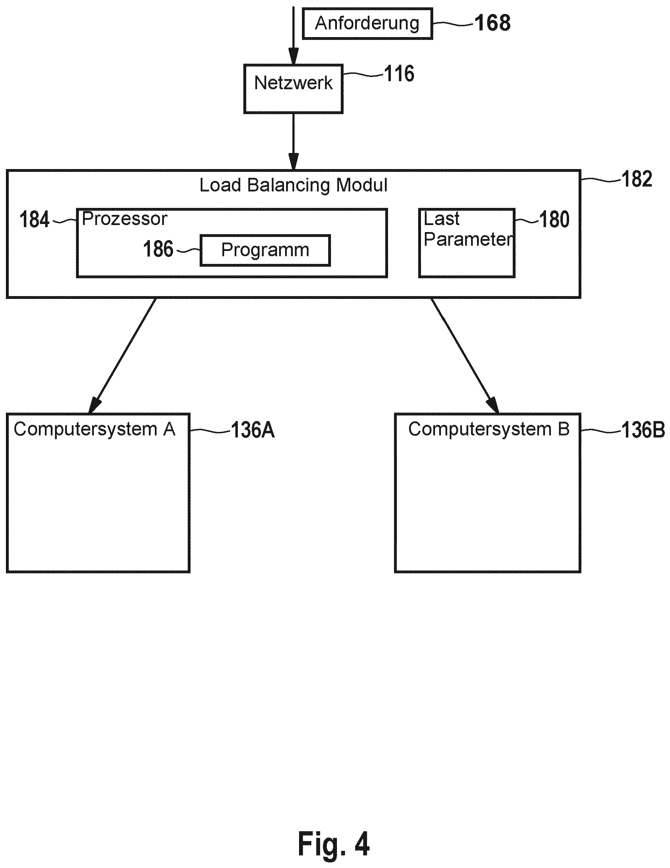

Die Figur 4 zeigt eine weitere Ausführungsform der Erfindung, bei der die Computersysteme A und B des erfindungsgemäßen Computersystems in einer Load-Balancing Konfiguration verschaltet sind. Hierzu ist ein Load-Balancing Modul 182 vorgesehen. Das Load-Balancing Modul 182 hat einen Prozessor 184 zur Ausführung von Programminstruktionen 186. Ferner hat das Load-Balancing Modul 182 einen Speicher 180 zur Speicherung je eines Last-Parameters für die Computersysteme A und B sowie gegebenenfalls weitere an das Load-Balancing Modul 182 angeschlossener Computersysteme, auf welche die Last zu verteilen ist.

Durch Ausführung der Programminstruktionen 186 werden die über das Netzwerk 116 empfangenen Anforderungen, insbesondere die Anforderung 168, entweder an das Computersystem A oder das Computersystem B weitergeleitet, um die Gesamtlast zwischen den Computersystemen A und B zu verteilen. Zur Verteilung der Last werden durch Ausführung der Programminstruktionen 186 beispielsweise für das Computersystem A ein Last-Parameter LA und für das Computersystem B ein Last-Parameter LB berechnet und in dem Speicher 180 gespeichert. Der Last-Parameter LA kann beispielsweise so bestimmt werden, dass die Anzahl der in einem zurückliegenden Zeitintervall einer vorbestimmten Länge an das Computersystem A weitergeleiteten Anforderungen in die Bestimmung des Last-Parameters LA eingeht. Hierbei können die Anforderungen eine unterschiedliche Gewichtung haben, je nach deren Inhalt. Entsprechend verhält es sich für den Last-Parameter LB.

Wenn eine zusätzliche Anforderung 168 über das Netzwerk 116 empfangen wird, so wird durch Ausführung der Programminstruktionen 186 auf die Last-Parameter LA und LB zugegriffen, um die Anforderung 168 an dasjenige der Computersysteme A und B mit dem geringeren Last-Parameter weiterzuleiten.

Die Figur 5 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat eine Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein (vgl. Verzeichnisserver 109 der Fig. 1). Ferner kann in dem Speicherbereich 123 ein Root-Zertifikat der PKI gespeichert sein. Das Root-Zertifikat wird z.B. anlässlich einer Personalisierung des ID-Tokens 106 dort gespeichert.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem ID-Provider-Computersystem 136 kann es sich um das erste Computersystem A oder B gemäß der Ausführungsform der Fig. 1 handeln oder um die mit dem Hot-Standby Modul 172 gemäß der Ausführungsform der Fig. 3 oder um die mit dem Load-Balancing Modul 182 der Ausführungsform der Fig. 4 geschalteten Computersysteme A und B. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Alternativ zu der in der Figur 5 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Der Speicher 140 ist Teil eines ersten HSM des ID-Provider-Computersystems 136, um den privaten Schlüssel 142 sicher zu speichern. Auch bei diesem Zertifikat kann es sich beispielsweise um ein Zertifikat nach einem PKI-Standard, wie zum Beispiel X.509 handeln.

Wenn für das ID-Provider-Computersystem 136 ein Backup durch ein prinzipiell gleich aufgebautes Ersatz-ID-Provider-Computersystem geschaffen werden soll, so wird beispielsweise so vorgegangen, dass das Ersatz-ID-Provider-Computersystem mit dem zweiten HSM an das Netzwerk 116 angeschlossen wird. Für das zweite HSM wird dann ein zweites Schlüsselpaar mit zugehörigem zweiten Zertifikat 190B erzeugt (Root-Schlüsselpaar mit Zertifikat oder mit dem Root-Zertifikat durch eine Zertifikatskette verbundenes Zertifikat auf der n-ten Hierarchieebene) und von dem Ersatz-ID-Provider-Computersystem wird das zweite Zertifikat mit dem zugehörenden zweiten öffentlichen Schlüssel des zweiten Schlüsselpaars an das ID-Provider-Computersystem 136 gesendet. Das erste HSM
erzeugt dann ein drittes Zertifikat durch Signieren des zweiten öffentlichen Schlüssels mit dem ersten privaten Schlüssel 142, wobei eine Zertifikatsprüfung des zweiten Zertifikats mittels einer Zertifikatskette, die das erste und dritte Zertifikat enthält, durchführbar ist. Nach bevorzugten Ausführungsformen ist dabei eine Zertifikatskettenprüfung vom dritten Zertifikat bis zum Wurzelzertifikat des ersten Zertifikats durchführbar. Die ersten und dritten Zertifikate werden z.B. auf einem öffentlichen Verzeichnisserver gespeichert. Alternativ oder zusätzlich werden die ersten und dritten Zertifikate und ggf. weitere für eine Zertifikatskettenprüfung erforderliche Zertifikate von dem ID-Provider-Computersystem 136 an das Ersatz-ID-Provider-Computersystem gesendet und dort gespeichert.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 ein oder mehrere Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall muss der Nutzer 102 aber nicht seine Identität gegenüber dem Dienst-Computersystem 150 offenbaren, sondern es reicht die Mitteilung, zum Beispiel nur eines der Attribute aus. Beispielsweise kann der Nutzer 102 über eines der Attribute einen Nachweis erbringen, dass er zu einer bestimmten Personengruppe gehört, die zugangsberechtigt für auf dem Dienst-Computersystem 150 zum Download bereitgehaltener Daten ist. Beispielsweise kann ein solches Kriterium ein Mindestalter des Nutzers 102 sein oder die Zugehörigkeit des Nutzers 102 zu einem Personenkreis, der auf bestimmte vertrauliche Daten eine Zugriffsberechtigung hat.

Zur Inanspruchnahme des von dem Dienst-Computersystem 150 zur Verfügung gestellten Dienstes wird wie folgt vorgegangen:
1. Authentifizierung des Nutzers 102 gegenüber dem ID-Token 106.
   Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
2. Authentifizierung des ID-Provider-Computersystems 136 gegenüber dem ID-Token 106.
   Hierzu wird eine Verbindung zwischen dem ID-Token 106 und dem ID-Provider-Computersystem 136 über das Nutzer-Computersystem 100 und das Netzwerk 116 hergestellt. Beispielsweise überträgt das ID-Provider-Computersystem 136 sein Zertifikat 144 über diese Verbindung an den ID-Token 106 oder das Zertifikat 144 wird aus einem Verzeichnisserver (vgl. Verzeichnisserver 109 der Fig. 1) abgerufen. Wenn es sich bei dem ID-Provider-Computersystem 136 um das erste Computersystem A handelt, wird dementsprechend das Zertifikat 144A an den ID-Token 106 übertragen, wenn es sich hingegen um das erste Computersystem B handelt, wird das Zertifikat 144B an den ID-Token 106 übertragen. Zusätzlich können jeweils ein oder mehrere weitere Zertifikate für die Durchführung einer Zertifikatskettenprüfung an den ID-Token 106 übertragen werden. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.
3. Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Leseberechtigung zum Auslesen, eines, mehrerer oder aller der in dem geschützten Speicherbereich 124 gespeicherten Attribute. Aufgrund eines entsprechenden Lesekommandos, welches das ID-Provider-Computersystem 136 über die Verbindung an den ID-Token 106 sendet, werden die angeforderten Attribute aus dem geschützten Speicherbereich 124 ausgelesen und durch Ausführung der Programminstruktionen 132 verschlüsselt. Die verschlüsselten Attribute werden über die Verbindung an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute.
Diese Attribute werden von dem ID-Provider-Computersystem mit Hilfe seines Zertifikats 144 signiert und über das Nutzer-Computersystem 100 oder direkt an das Dienst-Computersystem 150 übertragen. Dadurch wird das Dienst-Computersystem 150 über die aus dem ID-Token 106 ausgelesenen Attribute in Kenntnis gesetzt, sodass das Dienst-Computersystem 150 diese Attribute anhand der vorgegebenen ein oder mehreren Kriterien prüfen kann, um danach ggf. den von dem Benutzer 102 angeforderten Dienst zu erbringen.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Von besonderem Vorteil ist die Nutzbarmachung des ID-Tokens 106 für zum Beispiel E-Commerce und E-Government-Anwendungen, und zwar medienbruchfrei und rechtssicher aufgrund des durch die Notwendigkeit der Authentifizierung des Nutzers 102 und des ID-Provider-Computersystems 136 gegenüber dem ID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des ID-Provider-Computersystems 136 nicht erforderlich ist.

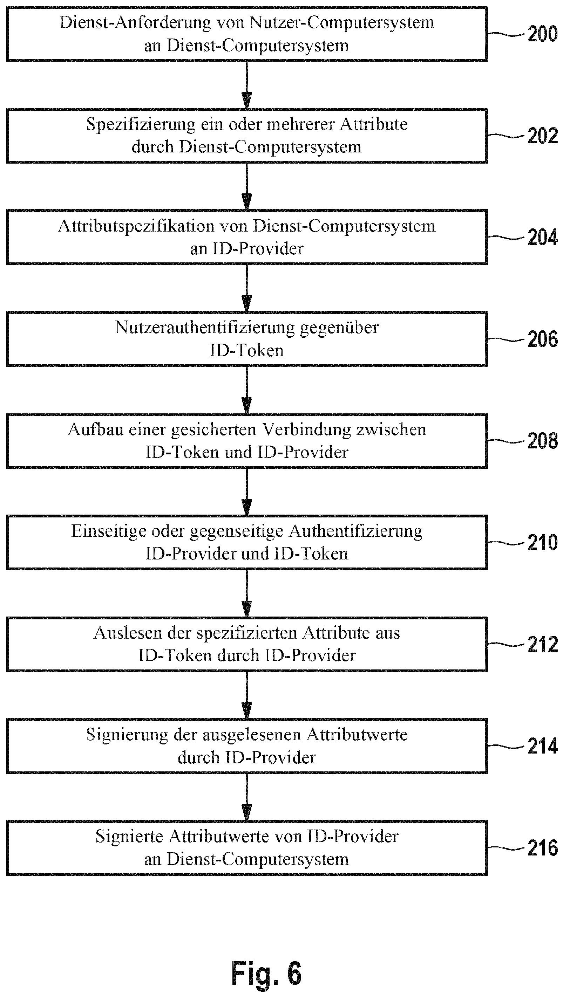

Die Figur 6 zeigt eine Ausführungsform eines erfindungsgemäßen Verfahrens. In dem Schritt 200 wird eine Dienst-Anforderung von dem Nutzer-Computersystem an das Dienst-Computersystem gesendet. Beispielsweise startet der Nutzer hierzu einen Internet-Browser des Nutzer-Computersystems und gibt eine URL zum Aufruf einer Webseite des Dienst-Computersystems ein. In die aufgerufene Webseite gibt der Nutzer dann seine Dienst-Anforderung ein, zum Beispiel zur Bestellung oder Auftragserteilung für einen Dienst oder ein Produkt.

In dem Schritt 202 spezifiziert das Dienst-Computersystem 150 daraufhin ein oder mehrere Attribute, welche es benötigt, um die Berechtigung des Nutzers für die Dienst-Anforderung zu prüfen. Insbesondere kann das Dienst-Computersystem solche Attribute spezifizieren, welche die digitale Identität des Nutzers 102 bestimmen. Diese Spezifizierung der Attribute durch das Dienst-Computersystem 150 kann fest vorgegeben sein oder je nach der Dienst-Anforderung im Einzelfall durch das Dienst-Computersystem 150 anhand vorgegebener Regeln bestimmt werden.

In dem Schritt 204 wird die Attributspezifikation, d.h. die in dem Schritt 202 erfolgte Spezifizierung der ein oder mehreren der Attribute, von dem Dienst-Computersystem an das ID-Provider-Computersystem übertragen, und zwar entweder direkt oder über das Nutzer-Computersystem.

Um dem ID-Provider-Computersystem die Möglichkeit zu geben, Attribute aus seinem ID-Token auszulesen, authentifiziert sich der Nutzer in dem Schritt 206 gegenüber dem ID-Token.

In dem Schritt 208 wird eine Verbindung zwischen dem ID-Token und dem ID-Provider-Computersystem aufgebaut. Hierbei handelt es sich vorzugsweise um eine gesicherte Verbindung, beispielsweise nach einem so genannten Secure Messaging-Verfahren.

In dem Schritt 210 erfolgt zumindest eine Authentifizierung des ID-Provider-Computersystems gegenüber dem ID-Token über die in dem Schritt 208 aufgebaute Verbindung. Zusätzlich kann eine Authentifizierung auch des ID-Tokens gegenüber dem ID-Provider-Computersystem vorgesehen sein.

Nachdem sowohl der Nutzer als auch das ID-Provider-Computersystem erfolgreich gegenüber dem ID-Token authentifiziert worden sind, erhält das ID-Provider-Computersystem von dem ID-Token die Zugriffsberechtigung zum Auslesen der Attribute. In dem Schritt 212 sendet das ID-Provider-Computersystem ein oder mehrere Lesekommandos zum Auslesen der gemäß Attributspezifikation erforderlichen Attribute aus dem ID-Token. Die Attribute werden dann mittels Ende-zu-Ende-Verschlüsselung über die gesicherte Verbindung an das ID-Provider-Computersystem übertragen und dort entschlüsselt.

Die ausgelesenen Attributwerte werden in dem Schritt 214 von dem ID-Provider-Computersystem signiert. In dem Schritt 216 sendet das ID-Provider-Computersystem die signierten Attributwerte über das Netzwerk. Die signierten Attributwerte erreichen das Dienst-Computersystem entweder direkt oder über das Nutzer-Computersystem. Im letzteren Fall kann der Nutzer die Möglichkeit haben, die signierten Attributwerte zur Kenntnis zu nehmen und/oder durch weitere Daten zu ergänzen. Es kann vorgesehen sein, dass die signierten Attributwerte gegebenenfalls mit den ergänzten Daten erst nach Freigabe durch den Nutzer von dem Nutzer-Computersystem an das Dienst-Computersystem weitergeleitet werden. Hierdurch ist größtmögliche Transparenz für den Nutzer hinsichtlich der von dem ID-Provider-Computersystem an das Dienst-Computersystem gesendeten Attribute hergestellt.

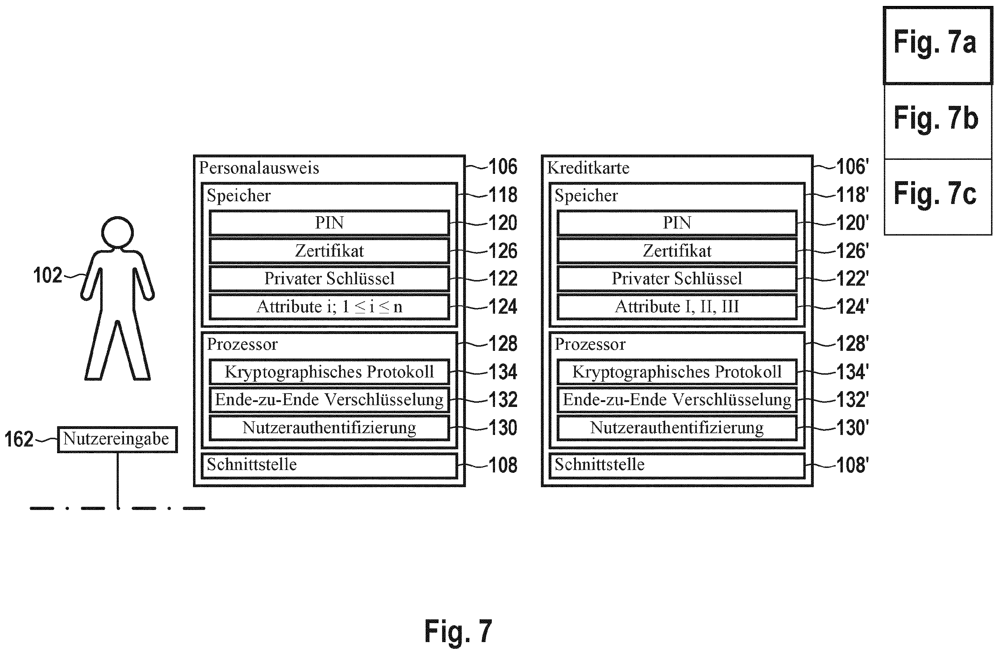

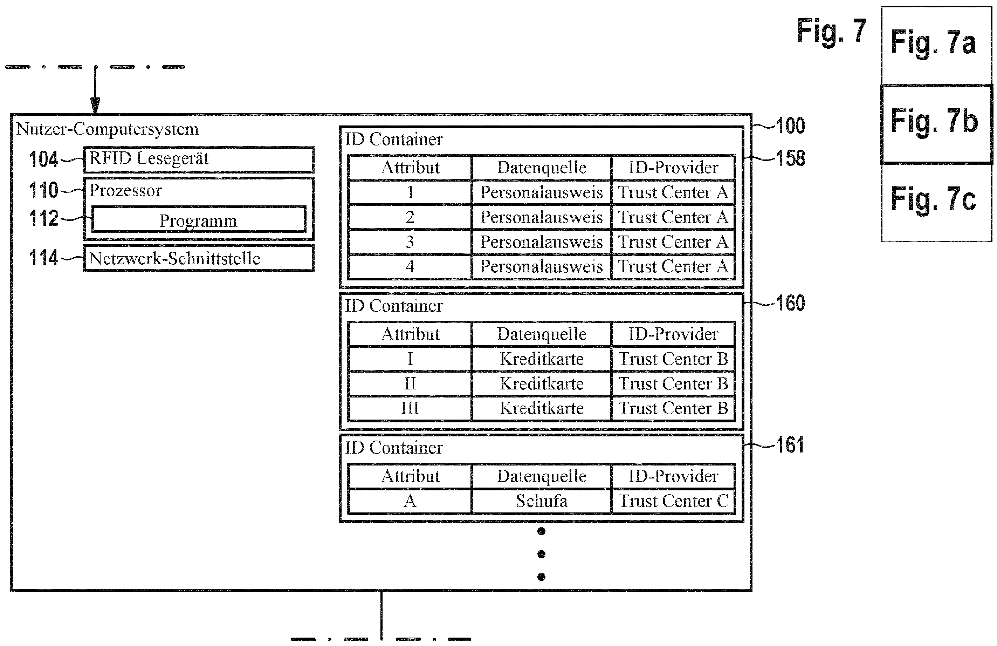

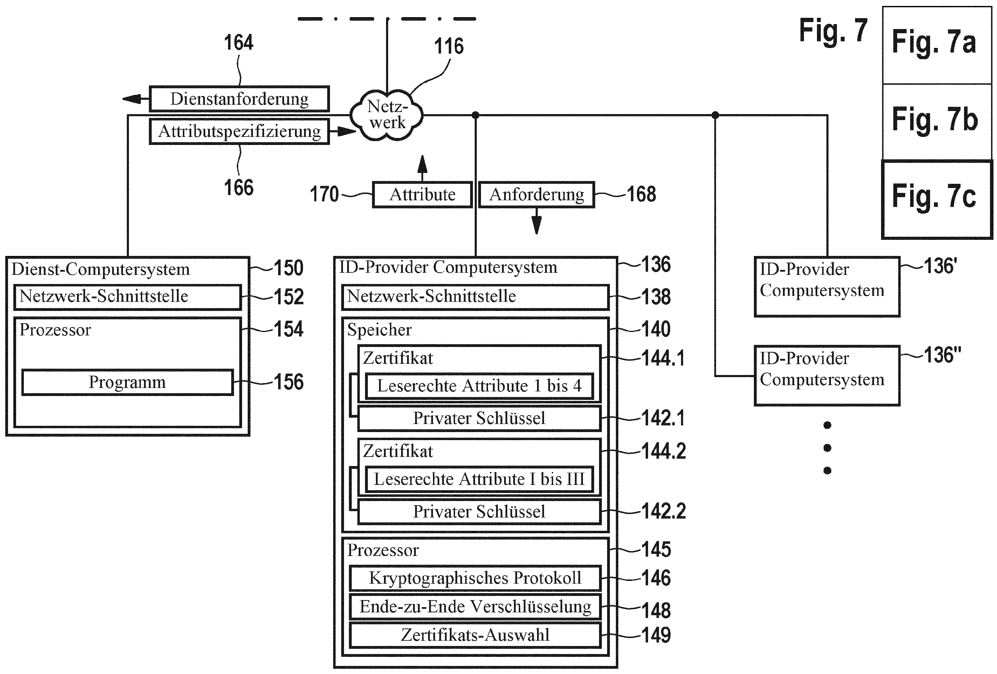

Die Figur 7 zeigt weitere Ausführungsformen eines erfindungsgemäßen ID-Tokens und erfindungsgemäße Computersysteme. Bei der Ausführungsform der Figur 7 ist der ID-Token 106 als Dokument ausgebildet, wie zum Beispiel als papier- und/oder kunststoffbasiertes Dokument mit einem integrierten elektronischen Schaltkreis, durch den die Schnittstelle 108, der Speicher 118 und der Prozessor 128 gebildet werden. Bei dem integrierten elektronischen Schaltkreis kann es sich beispielsweise um ein so genanntes Funketikett handeln, welches auch als RFID-Tag oder RFID-Label bezeichnet wird. Die Schnittstelle 108 kann aber auch kontaktbehaftet oder als so genanntes Dual Mode Interface ausgebildet sein.

Insbesondere kann es sich bei dem Dokument 106 um ein Wert- oder Sicherheitsdokument handeln, wie zum Beispiel um ein maschinenlesbares Reisedokument (MRTD), wie zum Beispiel einen elektronischen Reisepass oder einen elektronischen Personalausweis, oder um ein Zahlungsmittel, wie zum Beispiel eine Kreditkarte.

In dem geschützten Speicherbereich 124 sind bei der hier betrachteten Ausführungsform die Attribute i gespeichert, wobei 1 ≤ i ≤ n ist. Im Weiteren wird ohne Beschränkung der Allgemeinheit davon ausgegangen, dass es sich bei dem in der Figur 7 exemplarisch gezeigten ID-Token 106 um ein elektronisches Identitätsdokument, beispielsweise um einen elektronischen Personalausweis handelt. Beispielsweise handelt es sich bei dem Attribut i = 1 um den Namen, bei dem Attribut i = 2 um den Vornamen, bei dem Attribut i = 3 um die Adresse und bei dem Attribut i = 4 um das Geburtsdatum, etc.

Die Schnittstelle 104 des Nutzer-Computersystems 100 kann bei der hier betrachteten Ausführungsform als RFID-Lesegerät ausgebildet sein, welches einen integralen Bestandteil des Nutzer-Computersystems bilden kann oder als separate Komponente an dieses angeschlossen sein kann.

Der Nutzer 102 verfügt über einen oder mehrere weitere ID-Token, die prinzipiell gleich aufgebaut sind, wie z.B. einen ID-Token 106', bei dem es sich um eine Kreditkarte handelt.

In dem Nutzer-Computersystem 100 können mehrere Konfigurationsdatensätze 158, 160,... gespeichert sein. Jeder der Konfigurationsdatensätze gibt für eine bestimmte Attributmenge eine Datenquelle und ein ID-Provider-Computersystem an, welches die spezifizierte Datenquelle lesen kann. Bei dieser Ausführungsform kann das Nutzer-Computersystem 100 über das Netzwerk 116 verschiedene ID-Provider-Computersysteme 136, 136', ... ansprechen, die jeweils zu verschiedenen so genannten Trust-Centern gehören können. Beispielsweise gehört das ID-Provider-Computersystem 136 zu dem Trust-Center A und das im Prinzip gleich strukturierte ID-Provider-Computersystem 136' zu einem anderen Trust-Center B.

In dem Konfigurationsdatensatz 158, der auch als ID-Container bezeichnet wird, ist die Attributmenge der Attribute i = 1 bis i = 4 definiert. Diesen Attributen ist jeweils die Datenquelle "Personalausweis", d.h. der ID-Token 106 zugeordnet, sowie das Trust-Center A, d.h. das ID-Provider-Computersystem 136. Dieses kann beispielsweise in Form seiner URL in dem Konfigurationsdatensatz 158 spezifiziert sein.

In dem Konfigurationsdatensatz 116 ist dagegen eine Attributmenge I, II und III definiert. Als Datenquelle für diese Attribute ist jeweils die Kreditkarte, d.h. der ID-Token 106', angegeben. Der ID-Token 106' hat einen geschützten Speicherbereich 124', in dem die Attribute I, II, III, ... gespeichert sind. Bei dem Attribut I kann es sich zum Beispiel um den Namen des Inhabers der Kreditkarte, bei dem Attribut II um die Kreditkartennummer und bei dem Attribut III um die Gültigkeitsdauer der Kreditkarte handeln, etc.

Als ID-Provider-Computersystem ist in dem Konfigurationsdatensatz 160 das ID-Provider-Computersystem 136' des Trust-Centers B angegeben.

Alternativ zu der in der Figur 7 gezeigten Ausführungsform können in demselben Konfigurationsdatensatz für verschiedene Attribute auch verschiedene Datenquellen und/oder verschiedene ID-Provider-Computersysteme angegeben sein.

In der Ausführungsform der Figur 7 kann jedes der ID-Provider-Computersysteme 136, 136',... jeweils mehrere Zertifikate haben.

Beispielsweise sind in dem Speicher 140 des ID-Provider-Computersystems 136, der in der Figur 7 exemplarisch gezeigt ist, mehrere Zertifikate, wie zum Beispiel die Zertifikate 144.1 und 144.2 mit den jeweils zugeordneten privaten Schlüsseln 142.1 und 142.2 gespeichert. In dem Zertifikat 144.1 sind Leserechte des ID-Provider-Computersystems 136 auf die Attribute i = 1 bis i = 4 definiert, wohingegen in dem Zertifikat 144.2 Leserechte auf die Attribute I bis III definiert sind.

Zur Inanspruchnahme eines von dem Dienst-Computersystem 150 angebotenen Dienstes tätigt der Nutzer 102 zunächst eine Nutzereingabe 162 in das Nutzer-Computersystem 100, um beispielsweise in eine Webseite des Dienst-Computersystems 150 seine Anforderung für den gewünschten Dienst einzugeben. Diese Dienst-Anforderung 164 wird von dem Nutzer-Computersystem 100 über das Netzwerk 116 an das Dienst-Computersystem 150 übertragen. Das Dienst-Computersystem 150 antwortet darauf mit einer Attributspezifizierung 166, d.h. mit einer Spezifizierung derjenigen Attribute, welche das Dienst-Computersystem 150 zur Bearbeitung der Dienst-Anforderung 164 von dem Nutzer 102 benötigt. Die Attributspezifizierung kann beispielsweise in Form der Attributnamen erfolgen, wie zum Beispiel "Name", "Vorname", "Adresse", "Kreditkartennummer".

Der Empfang der Attributspezifizierung 166 wird dem Nutzer 102 durch das Nutzer-Computersystem 100 signalisiert. Der Nutzer 102 kann daraufhin einen oder erforderlichenfalls mehrere der Konfigurationsdatensätze 158, 160, ... auswählen, die jeweils Attributmengen definieren, welche die Attribute gemäß der Attributspezifizierung 166 zumindest als Teilmenge beinhalten.

Verlangt der Attributspezifizierung 166 beispielsweise lediglich die Mitteilung des Namens, des Vornamens und der Adresse des Nutzers 102, so kann der Nutzer 102 den Konfigurationsdatensatz 158 auswählen. Wird dagegen zusätzlich in der Attributspezifizierung 166 die Kreditkartennummer spezifiziert, so kann der Nutzer 102 zusätzlich den Konfigurationsdatensatz 160 auswählen. Dieser Vorgang kann auch vollautomatisch durch das Nutzer-Computersystem 100, beispielsweise durch Ausführung der Programminstruktionen 112, durchgeführt werden.

Im Weiteren wird zunächst davon ausgegangen, dass nur eine der Konfigurationsdatensätze, wie zum Beispiel der Konfigurationsdatensatz 158, aufgrund der Attributspezifizierung 166 ausgewählt wird.

Das Nutzer-Computersystem 100 sendet daraufhin eine Anforderung 168 an das oder die in dem gewählten Konfigurationsdatensatz angegebene ID-Provider-Computersysteme, in dem betrachteten Beispiel an das ID-Provider-Computersystem 136 des Trust-Centers A. Diese Anforderung 168 beinhaltet eine Angabe der von dem ID-Provider-Computersystem 136 aus der in dem Konfigurationsdatensatz 158 angegebenen Datenquelle auszulesenden Attribute gemäß der Attributspezifizierung 166.

Das ID-Provider-Computersystem 136 wählt daraufhin eines oder mehrerer seiner Zertifikate aus, welche die zum Lesen dieser Attribute erforderlichen Leserechte aufweisen. Wenn beispielsweise die Attribute i = 1 bis 3 aus dem Personalausweis gelesen werden sollen, so wählt das ID-Provider-Computersystem 136 sein Zertifikat 144.1 aus, welches die dafür erforderlichen Leserechte definiert. Diese Auswahl des Zertifikats wird durch Ausführung der Programminstruktionen 149 durchgeführt.

Daraufhin wird die Ausführung des kryptographischen Protokolls gestartet. Beispielsweise sendet das ID-Provider-Computersystem 136 hierzu eine Antwort an das Nutzer-Computersystem 100. Das Nutzer-Computersystem 100 fordert daraufhin den Nutzer 102 zu seiner Authentifizierung gegenüber der spezifizierten Datenquelle, d.h. hier gegenüber dem Personalausweis, auf.

Der Nutzer 102 bringt daraufhin seinen Personalausweis, d.h. den ID-Token 106, in den Bereich des RFID-Lesegeräts 104, und gibt beispielsweise seine PIN zu seiner Authentifizierung ein. Durch die erfolgreiche Authentifizierung des Nutzers 102 gegenüber dem ID-Token 106 wird dieser für die Durchführung des kryptographischen Protokolls, d.h. für die Durchführung der Programminstruktionen 134 freigeschaltet. Im Weiteren authentifiziert sich das ID-Provider-Computersystem 136 gegenüber dem ID-Token 106 mit Hilfe des ausgewählten Zertifikats 144.1, beispielsweise mit Hilfe eines Challenge-Response-Verfahrens. Diese Authentifizierung kann auch gegenseitig sein. Nach erfolgreicher Authentifizierung des ID-Provider-Computersystems 136 gegenüber dem ID-Token 106 richtet das ID-Provider-Computersystem eine Leseanforderung zum Lesen der erforderlichen Attribute an das Nutzer-Computersystem 100, welche dieses über das RFID-Lesegerät 104 an den ID-Token 106 weiterleitet. Der ID-Token 106 prüft anhand des Zertifikats 144.1, ob das ID-Provider-Computersystem 136 die dafür erforderlichen Leserechte hat. Wenn dies der Fall ist, werden die gewünschten Attribute aus dem geschützten Speicherbereich 124 ausgelesen und mittels Ende-zu-Ende-Verschlüsselung an das ID-Provider-Computersystem über das Nutzer-Computersystem 100 übertragen.

Das ID-Provider-Computersystem 136 sendet dann eine Antwort 170, die die ausgelesenen Attribute beinhaltet, über das Netzwerk 116 an das Dienst-Computersystem 150. Die Antwort 170 ist mit dem Zertifikat 144.1 digital signiert.

Alternativ sendet das ID-Provider-Computersystem 136 die Antwort 170 an das Nutzer-Computersystem 100. Der Nutzer 102 erhält daraufhin die Möglichkeit, die in der Antwort 170 beinhalteten Attribute zu lesen und zu entscheiden, ob er diese Attribute wirklich an das Dienst-Computersystem 150 weiterleiten möchte oder nicht. Erst nach Eingabe eines Freigabekommandos des Nutzers 102 in das Nutzer-Computersystem 100 wird dann die Antwort 170 an das Dienst-Computersystem 150 weitergeleitet. Bei dieser Ausführungsform ist es ferner möglich, dass der Nutzer 102 die Antwort 170 um weitere Daten ergänzt.

Wenn mehrere ID-Provider-Computersysteme 136, 136', ... involviert sind, so können die einzelnen Antworten der ID-Provider-Computersysteme durch das Nutzer-Computersystem 100 in einer einzigen Antwort, die sämtliche der Attribute gemäß Attributspezifizierung 166 beinhalten, zusammengefasst werden, welche dann von dem Nutzer-Computersystem 100 an das Dienst-Computersystem 150 gesendet wird.

Nach einer Ausführungsform der Erfindung kann der Nutzer 102 anlässlich der Dienstanforderung 164 ein oder mehrerer seiner Attribute gegenüber dem Dienst-Computersystem 150 offenbaren, beispielsweise indem diese Attribute des Nutzers als Teil der Dienstanforderung 164 über das Netzwerk 116 an das Dienst-Computersystem übertragen werden. Insbesondere kann der Nutzer 102 diese Attribute in die Webseite des Dienst-Computersystems 150 eingeben. Die Richtigkeit dieser Attribute wird dann durch die Antwort 170 bestätigt, d.h. das Dienst-Computersystem 150 kann die von dem Nutzer 102 empfangenen Attribute mit den von dem ID-Provider Computersystem 136 aus dem ID-Token 106 ausgelesenen Attribute vergleichen und auf Übereinstimmung prüfen.

Nach einer weiteren Ausführungsform der Erfindung kann auch zumindest ein weiteres Attribut in der Attributspezifizierung 166 angegeben sein, welches nicht auf einem der ID-Token des Nutzers 102 gespeichert ist, sondern von einer externen Datenquelle abfragbar ist. Hierbei kann es sich z.B. um ein Attribut betreffend die Kreditwürdigkeit des Nutzers 102 handeln. Das Nutzer-Computersystem 100 kann hierzu einen weiteren Konfigurationsdatensatz 161 beinhalten, welcher für das Attribut A - z.B. die Kreditwürdigkeit - die Angabe einer Datenquelle und eines ID-Provider Computersystems beinhaltet. Bei der Datenquelle kann es sich um eine Online Auskunftei, wie z.B. Schufa, Dun & Bradstreet oder dergleichen handeln. Als ID-Provider Computersystem ist beispielsweise ein Trust Center C angegeben, wie in der Ausführungsform der Fig. 3. Die Datenquelle kann sich hier in dem Trust Center C befinden.

Um das Attribut A abzufragen richtet also das Nutzer-Computersystem 100 eine entsprechende Anforderung (in der Fig. 3 nicht gezeigt) an das Trust Center C, d.h. das ID-Provider Computersystem 136". Dieses liefert daraufhin das Attribut A, welches das Nutzer-Computersystem 100 zusammen mit den weiteren Attributen, die aus dem oder den ID-Token des Nutzers 102 ausgelesen wurden, an das Dienst-Computersystem 150 weiterleitet.

Vorzugsweise erfolgt die Abfrage des Attributs A nachdem die die digitale Identität des Nutzer 102 betreffenden Attribute bereits aus einem der ID-Token des Nutzers 102 abgefragt worden sind, und beispielsweise als signierte Antwort 170 von dem Nutzer-Computersystem 100 empfangen worden sind. Die Abfrage des Attributs A durch das Nutzer-Computersystem 100 von dem ID-Provider Computersystem 136" beinhaltet dann die signierte Antwort 170, so dass das ID-Provider Computersystem 136" hinsichtlich der Identität des Nutzers 102 ein sichere Information hat.

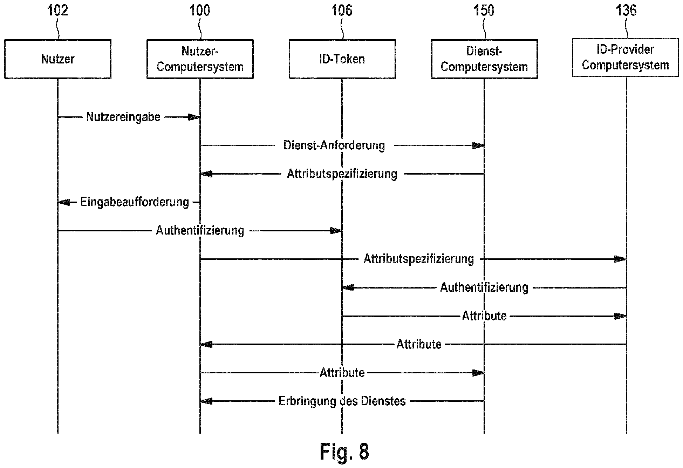

Die Figur 8 zeigt eine weitere Ausführungsform eines erfindungsgemäßen Verfahrens. Durch eine Nutzereingabe eines Nutzers 102 in ein Nutzer-Computersystem 100 spezifiziert der Nutzer 102 einen Dienst eines Dienst-Computersystems, welchen er oder sie in Anspruch nehmen möchte. Dies erfolgt beispielsweise durch Aufruf einer Internetseite des Dienst-Computersystems und einer Auswahl eines der dort angebotenen Dienste. Die Dienst-Anforderung des Nutzers 102 wird von dem Nutzer-Computersystem 100 an das Dienst-Computersystem 150 übertragen.

Das Dienst-Computersystem 150 antwortet auf die Dienst-Anforderung mit einer Attributspezifizierung, d.h. beispielsweise einer Liste von Attributnamen. Nach Empfang der Attributspezifizierung fordert das Nutzer-Computersystem 100 den Nutzer 102, beispielsweise durch eine Eingabeaufforderung, zur Authentifizierung gegenüber dem ID-Token 106 auf.

Der Nutzer 102 authentifiziert sich daraufhin gegenüber dem ID-Token 106, beispielsweise durch Eingabe seiner PIN. Nach erfolgreicher Authentifizierung wird die Attributspezifizierung von dem Nutzer-Computersystem 100 an ein ID-Provider-Computersystem 136 weitergeleitet. Dieses authentifiziert sich daraufhin gegenüber dem ID-Token 106 und richtet eine Leseanforderung zum Lesen der Attribute gemäß der Attributspezifizierung an den ID-Token 106.

Unter der Voraussetzung der vorherigen erfolgreichen Authentifizierung des Nutzers 102 und des ID-Provider-Computersystems 136 antwortet der ID-Token 106 auf die Leseanforderung mit den gewünschten Attributen. Das ID-Provider-Computersystem 136 signiert die Attribute und sendet die signierten Attribute an das Nutzer-Computersystem 100. Nach Freigabe durch den Nutzer 102 werden die signierten Attribute dann an das Dienst-Computersystem 150 übertragen, welches dann ggf. den gewünschten Dienst erbringen kann.

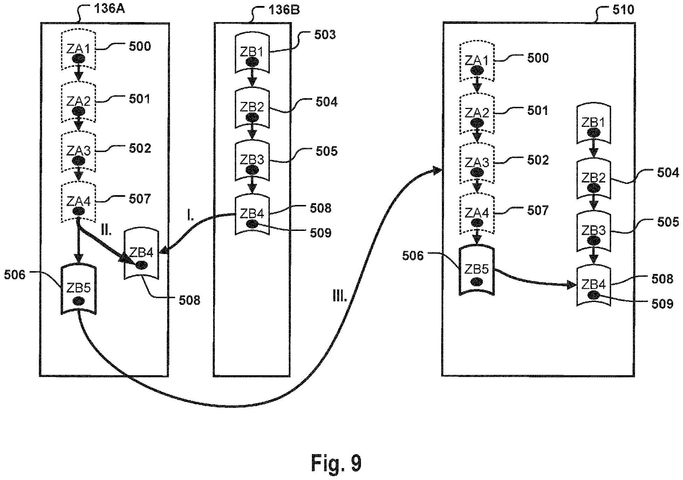

Die Figur 9 zeigt eine erste Ausführungsform des erfindungsgemäßen HSM Migrationsverfahrens. In Figur 9 wird die Übertragung eines zweiten Zertifikates 508 von Computersystem B 136B, welches über ein neues oder "zweites" HSM 101B verfügt, auf Computersystem A 136A, welches über ein altes oder "erstes" HSM 101A verfügt, gezeigt. Durch das erste HSM 101A wird ein drittes Zertifikat 506 erstellt, welches mitsamt all seiner Vorgängerzertifikate 507, 502, 501 in der Zertifikatskette bis einschließlich des Root-Zertifikats 500 von Computersystem A 136A auf die externe Komponente 510 übertragen wird.

Bei der externen Komponente kann es sich beispielsweise um den Speicher 140 B des Computersystems B, einen Verzeichnisserver 109 oder andere Speichermedien oder Computersysteme mit Speichermedien handeln. Das im Folgenden beschriebene Verfahren ist in einem Aspekt unter dem Gesichtspunkt der Datensicherung und in einem weiteren Aspekt unter dem Gesichtspunkt des Load-Balancing und der Performancesteigerung vorteilhaft.

Wird das Link-Zertifikat 506 mitsamt der Zertifikatskette 507, 502, 501, 500 z.B. auf das Computersystem B 136B übertragen, so kann ein Load-Balancing Modul 182 Zertifizierungs-Anfragen je nach Auslastung sowohl an Computersystem A oder Computersystem B weiterleiten, da die Prüfung von Zertifikaten innerhalb dieser Kette nun auf beiden Computersystemen möglich ist. Dadurch kann die Auslastung jedes einzelnen Computersystems A, B reduziert und die Responsezeiten verkürzt werden.

Bei dem ersten 507 und zweiten 508 Zertifikat der in Figur 9 dargestellten Ausführungsform der Erfindung handelt es sich nicht um Root-Zertifikate, sondern um Zertifikate, deren Gültigkeit jeweils mittels der öffentlichen Schlüssel übergeordneter Zertifikate prüfbar ist. Jedes der in Figur 9 dargestellten Zertifikate 500-505, 507, 508 beinhaltet einen zu dem jeweiligen Zertifikat gehörenden öffentlichen Schlüssel, welcher als schwarzer Kreis innerhalb jedes Zertifikates dargestellt ist, sowie eine Signatur, die durch Verschlüsselung eines Datenwertes, z.B. eines Hashwertes des Zertifikates, durch den privaten Schlüssel eines dem Zertifikat übergeordneten Zertifikates gebildet wird. Die Gültigkeit eines Zertifikats kann jeweils durch ein in einer Zertifikatskette übergeordnetes Zertifikat bezeugt werden dadurch, dass dieses die Signatur des untergeordneten, zu prüfenden Zertifikates mit seinem öffentlichen Schlüssel entschlüsselt und verifiziert. So kann zum Beispiel ein Datenverarbeitungssystem mittels des Zertifikats ZA2 501 die Authentizität des Zertifikats ZA3 502 durch Entschlüsselung der Signatur des Zertifikats ZA3 502 durch den öffentlichen Schlüssel von Zertifikats ZA2 501 prüfen und bezeugen. Zu jedem Zertifikat gehört ein asymmetrisches Schlüsselpaar mit privatem und öffentlichem Schlüssel, wobei durch die Verschlüsselung eines Datenwertes eines nächstfolgenden Zertifikates 502 durch den privaten Schlüssel eines übergeordneten Zertifikates 501 das nächstfolgende Zertifikat 502 signiert wird, wodurch eine Zertifikatskette entsteht. Mit dem öffentlichen Schlüssel des übergeordneten Zertifikates 501, welches dem Zertifikat 501 zugeordnet ist, lässt sich also die Signatur des untergeordneten Zertifikates 502 wieder entschlüsseln und dadurch verifizieren. Durch Signatur von Datenwerten eines Zertifikats durch den privaten Schlüssel des jeweils übergeordneten Zertifikats kann eine Zertifikatskette erzeugt werden.

Letztlich kann also die Gültigkeit der Zertifikate 507, 502, und 501 durch das Root-Zertifikat 500 der alten HSM 101A geprüft werden. Durch Übertragung des Link-Zertifikates 506 sowie aller dem Link-Zertifikat übergeordneten Zertifikate innerhalb der Zertifikatskette bis einschließlich des Wurzelzertifikats 500 vom Computersystem A auf die externe Komponente wird sichergestellt, dass die auf dem alten HSM vorhandenen Zertifikate auch weiterhin zur Prüfung von Zertifikaten und zur Durchführung von Zertifikatskettenprüfungen bis hin zu dem Wurzelzertifikat 500 verwendet werden können. Es ist hierfür nicht notwendig, die privaten Schlüssel von dem alten HSM 101 A auszulesen.

Die Schritte der Übertragung des zweiten Zertifikats 508 von dem neuen Computersystem B auf das alte Computersystem A ist in Figur 9 als römische Nummer "I" dargestellt. Die Erzeugung des Link-Zertifikats, also des "dritten Zertifikates" 506 durch Signierung des Datenwertes, z.B. des öffentlichen Schlüssels des Zertifikates 506, durch den privaten Schlüssel des ersten Zertifikates 507 ist durch die römische Nummer "II", die Übertragung des dritten Zertifikats sowie der gesamten Zertifikatskette vom dritten Zertifikat 506 bis hin zum Root-Zertifikat 500 vom Computersystem A 136A auf die externe Komponente 510 ist durch die römische Nummer III gekennzeichnet.

Die Validität des zweiten Zertifikats 508 kann nun also sowohl durch ein Datenverarbeitungssystem mittels des Zertifikates 505, welches zu der Zertifikatskette 504,503 des neuen HSM gehört, und dessen zugehörigem öffentlichen Schlüssel bestätigt werden, als auch mittels des Zertifikates 507 und zugehörigem öffentlichen Schlüssel, welches zur Zertifikatskette 502, 501 und 500 des alten Computersystems A 136A gehört. In Figur 9 ist also die Erzeugung eines dritten Zertifikats 506 durch das erste HSM 101A durch Signieren des zweiten öffentlichen Schlüssels 509 mit dem ersten privaten Schlüssel eines ersten Zertifikates 507 dargestellt. Dadurch ist eine Zertifikatsprüfung des zweiten Zertifikats 508 mittels einer Zertifikatskette, die das erste 507 und dritte 506 Zertifikat enthält, durchführbar.

Da dem Link-Zertifikat 506 ein zweiter privater Schlüssel auf dem neuen HSM 101B zugeordnet ist, wobei der zweite private Schlüssel mit dem zweiten öffentlichen Schlüssel 509 ein asymmetrisches Schlüsselpaar bildet, lassen sich mit Hilfe dieses zweiten privaten Schlüssels nun weitere Zertifikate signieren, so dass auch für diese weiteren Zertifikate eine Zertifikatskettenprüfung bis zum Wurzelzertifikat 500 durchführbar ist.

### Bezugszeichenliste

- 10-20: Schritte
- 100: Nutzer-Computersystem
- 101: HSM
- 102: Nutzer
- 103: Prozessor
- 104: Schnittstelle
- 105: Programminstruktionen
- 106: ID-Token
- 107: Netzwerk
- 108: Schnittstelle
- 109: Verzeichnisserver
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 141: geschützter Speicherbereich
- 142: privater Schlüssel
- 143: Programm
- 144: Zertifikat
- 144A: erstes Zertifikat
- 144B: drittes Zertifikat
- 145: Prozessor
- 146: Programminstruktionen
- 147: öffentlicher Schlüssel
- 147A: erster öffentlicher Schlüssel
- 147B: signierter öffentlicher Schlüssel des dritten Zertifikats
- 148: Programminstruktionen
- 149: Programminstruktionen
- 150: Dienst-Computersystem
- 152: Netzwerk-Schnittstelle
- 154: Prozessor
- 156: Programminstruktionen
- 158: Konfigurationsdatensatz
- 160: Konfigurationsdatensatz
- 161: Konfigurationsdatensatz
- 162: Nutzereingabe
- 164: Dienst-Anforderung
- 166: Attributspezifizierung
- 168: Anforderung
- 170: Antwort
- 172: Hot-Standby-Modul
- 174: Prozessor
- 176: Programminstruktionen
- 178: Schalter
- 180: Speicher
- 182: Load-Balancing Modul
- 184: Prozessor
- 186: Programminstruktionen
- 190B: zweites Zertifikat
- 191B: zweiter öffentlicher Schlüssel
- 200-216: Schritte
- 500: Root Zertifikat
- 503: Root Zertifikat
- 501-502: Zertifikat
- 504-508: Zertifikat
- 509: Öffentlicher Schlüssel
- 510: Externe Komponente

## Patentansprüche

1. Verfahren zur Migration von einem ersten Hardware-Sicherheitsmodul - HSM - (140;101A) zu einem zweiten HSM (101B), um einem ID-Provider-Computersystem eine Authentifikation gegenüber einem elektronischen Identitätsdokument in welches im Zuge der Personalisierung das Root-Zertifikat des ersten HSM als Vertrauensanker eingebracht wurde mittels des zweiten HSM zu ermöglichen, wobei bei der Migration ein privater Schlüssel des ersten HSM nicht ausgelesen zu werden braucht, wobei dem ersten HSM ein erstes asymmetrisches kryptographisches Schlüsselpaar mit einem ersten privaten (142; 142A) und einem ersten öffentlichen Schlüssel (147 A) und ein erstes den ersten öffentlichen Schlüssel beinhaltendes Zertifikat (144; 144A) zugeordnet ist, mit folgenden Schritten:
- Erzeugung eines zweiten asymmetrischen kryptographischen Schlüsselpaars mit einem zweiten privaten (142B) und einem zweiten öffentlichen Schlüssel (191B) sowie eines zweiten Zertifikates (190B), welches den zweiten öffentlichen Schlüssel beinhaltet, durch das zweite HSM,
- Übertragung des zweiten Zertifikates (190B) mit dem zweiten öffentlichen Schlüssel von dem zweiten HSM an das erste HSM, und
- Erzeugung eines dritten Zertifikats (144B) durch das erste HSM durch Signieren des zweiten öffentlichen Schlüssels mit dem ersten privaten Schlüssel, wobei das dritte Zertifikat die Funktion eines "Cross-Zertifikats" einnimmt, wobei eine Zertifikatsprüfung des öffentlichen Schlüssels des zweiten Zertifikats mittels einer ersten Zertifikatskette, die das erste und dritte Zertifikat enthält, durchführbar ist;
- Übertragung des dritten Zertifikats mitsamt dem signierten zweiten öffentlichen Schlüssels an das ID-Provider-Computersystem oder einen Zertifikatsserver,
- Senden eines Zertifikats-Requests mit einem öffentlichen Schlüssel des ID-Provider-Computersystem (pub[ISS]) von dem ID-Provider-Computersystem an das zweite HSM;
- Signieren des öffentlichen Schlüssel (pub[ISS]) des ID-Provider-Computersystems mit dem zweiten privaten Schlüssel durch das zweite HSM, um ein weiteres Zertifikat zu bilden, wobei die Signatur des weiteren Zertifikats mit dem dritten Zertifikat verifiziert werden kann unter Verwendung des Root-Zertifikats des ersten HSM;
- Authentifikation des ID-Provider-Computersystems gegenüber dem elektronischen Identitätsdokument durch Bereitstellung einer Zertifikatskette, die zumindest das dritte Zertifikat und das weitere Zertifikat enthält an das Identitätsdokument, um dem Identitätsdokument eine Prüfung zu ermöglichen, ob das ID-Provider-Computersystem eine Vertrauensstellung zum zweiten HSM und zum alten HSM hat.

2. Verfahren nach Anspruch 1, ferner umfassend: Freigabe vertraulicher Daten an das ID-Provider-Computersystem durch das Identitätsdokument, wenn das Identitätsdokument feststellt, dass die Vertrauensstellung gegeben ist.

3. Verfahren nach Anspruch 1, wobei das erste HSM für die Durchführung kryptographischer Operationen durch das zweite HSM ersetzt wird.

4. Verfahren nach Anspruch 1, wobei es sich bei dem zweiten Zertifikat um ein selbstsigniertes Wurzelzertifikat handelt, welches den zweiten öffentlichen Schlüssel enthält und durch den zugehörigen zweiten privaten Schlüssel signiert wurde.

5. Verfahren nach Anspruch 1, wobei das dritte Zertifikat sich innerhalb einer Zertifikatskette zu dem Wurzelzertifikat des ersten Zertifikats befindet, und wobei die besagte Zertifikatskette bis zum Wurzelzertifikat des ersten HSM ebenfalls an das ID-Provider-Computersystem oder den Verzeichnisserver übertragen werden, sofern sich diese Zertifikatskette nicht bereits dort befinden.

6. Verfahren nach einem der vorigen Ansprüche, wodurch durch das zweite HSM ein Backup für das erste HSM geschaffen wird.

7. Verfahren zum Lesen zumindest eines in einem Identitätsdokument (106, 106') gespeicherten Attributs, wobei das Identitätsdokument einem Nutzer (102) zugeordnet ist, mit folgenden Schritten:
- Bereitstellung eines ersten Computersystems, das ein erstes HSM beinhaltet, wobei das erste Computersystem das ID-Provider-Computersystem ist,
- Durchführung des Verfahrens zur Migration von einem ersten HSM zu einem zweiten HSM gemäß einem der Ansprüche 1-6, sodass das erste Computersystem das zweite HSM beinhaltet, nachdem die Migration durchgeführt worden ist,
- Authentifizierung des Nutzers gegenüber dem Identitätsdokument,
- Authentifizierung des ersten Computersystems (136) gegenüber dem Identitätsdokument,
- nach erfolgreicher Authentifizierung des Nutzers und des ersten Computersystems gegenüber dem Identitätsdokument, Lesezugriff des ersten Computersystems auf das zumindest eine in dem Identitätsdokument gespeicherte Attribut zur Übertragung des zumindest einen Attributs nach dessen Signierung an ein zweites Computersystem (150), , wobei die Authentifizierung mit Hilfe des zweiten HSM durchgeführt wird.

8. Verfahren nach Anspruch 7, mit folgenden weiteren Schritten:
- Signierung des zumindest einen aus dem Sicherheitsdokument gelesenen Attributs durch das erste Computersystem mit Hilfe des zweiten HSM,
- Übertragung des signierten Attributs von dem ID-Provider-Computersystem an ein zweites Computersystem.

9. Verfahren nach Anspruch 8, mit folgenden weiteren Schritten:
- Senden einer Anforderung (164) von einem dritten Computersystem (100) an das zweite Computersystem,
- Spezifizierung eines oder mehrerer Attribute durch das zweite Computersystem,
- Senden der Attributspezifizierung (166) von dem zweiten Computersystem an das erste Computersystem,
wobei der Lesezugriff des ersten Computersystems erfolgt, um die in der Attributspezifizierung spezifizierten ein oder mehrere Attribute aus dem Sicherheitsdokument auszulesen.

10. Verfahren nach einem der vorhergehenden Ansprüche 7-9, wobei das erste Computersystem mehrere der Zertifikate (144.1; 144.2) mit unterschiedlichen Leserechten aufweist, wobei das erste Computersystem aufgrund des Empfangs der Attributspezifizierung zumindest eines der Zertifikate auswählt, welches die zum Lesen der in der Attributspezifizierung spezifizierten Attribute ausreichenden Leserechte aufweist.

11. Verfahren nach einem der vorhergehenden Ansprüche 7-10 wobei das dritte Computersystem zumindest einen Konfigurationsdatensatz (161) hat, welcher eine externe Datenquelle zur Abfrage eines weiteren Attributs (A) von dem dritten Computersystem über das Netzwerk (116) spezifiziert.

12. Verfahren nach Anspruch 11, wobei die Abfrage des weiteren Attributs erfolgt, nachdem das zumindest eine Attribut aus dem ID-Token ausgelesen worden ist, und nachdem das dritte Computersystem das zumindest eine signierte Attribut von dem ersten Computersystem empfangen hat, wobei die Abfrage das zumindest eine signierte Attribut beinhaltet.

13. Verfahren nach einem der Ansprüche 1-12, wobei das zweite Zertifikat kein Root-Zertifikat ist und eine Zertifikatsprüfung des zweiten Zertifikats mittels der ersten Zertifikatskette und mittels einer zweiten Zertifikatskette durchführbar ist, wobei die zweite Zertifikatskette das Root Zertifikat des zweiten HSM enthält.

14. Computerprogrammprodukt mit von einem Computersystem ausführbaren Instruktionen zur Durchführung eines Verfahrens nach einem der vorhergehenden Ansprüche 1-6.

15. System umfassend:
- ein elektronisches Identitätsdokument in welches im Zuge der Personalisierung das Root-Zertifikat eines ersten Hardware-Sicherheitsmoduls - HSM - (140;101A) als Vertrauensanker eingebracht wurde;
- optional ein Verzeichnisserver;
- ein ID-Provider-Computersystem beinhaltend ein zweites HSM (101B), wobei das zweite HSM das Resultat eines HSM Migrationsverfahren vom ersten an das zweite HSM ist und als Ersatz für das erste HSM dient, um dem ID-Provider-Computersystem eine Authentifikation gegenüber dem elektronischen Identitätsdokument mittels des zweiten HSM zu ermöglichen,
- wobei das zweite HSM konfiguriert ist zur:
• Erzeugung eines zweiten asymmetrischen kryptographischen Schlüsselpaars mit einem zweiten privaten (142B) und einem zweiten öffentlichen Schlüssel (191B) sowie eines zweiten Zertifikates (190B), welches den zweiten öffentlichen Schlüssel beinhaltet, durch das zweite HSM,
• Übertragung des zweiten Zertifikates (190B) mit dem zweiten öffentlichen Schlüssel von dem zweiten HSM an das erste HSM, und
- wobei das zweite HSM oder der optionale Verzeichnisserver konfiguriert sind zum:
• Empfang eines dritten Zertifikats (144B) von dem ersten HSM, wobei das dritte Zertifikat eine mit einem ersten privaten Schlüssel des ersten HSM erzeugte Signatur des zweiten öffentlichen Schlüssels enthält, wobei das dritte Zertifikat die Funktion eines "Cross-Zertifikats" einnimmt, wobei eine Zertifikatsprüfung des öffentlichen Schlüssels des zweiten Zertifikats mittels einer ersten Zertifikatskette, die das erste und dritte Zertifikat enthält, durchführbar ist, wobei das dritte Zertifikat mitsamt dem signierten zweiten öffentlichen Schlüssel empfangen wird;
- wobei das ID-Provider-Computersystem konfiguriert ist zum:
• Senden eines Zertifikats-Requests mit einem öffentlichen Schlüssel des ID-Provider-Computersystem (pub[ISS]) an das zweite HSM;
- wobei das zweite HSM konfiguriert ist zum:
• Signieren des öffentlichen Schlüssel (pub[ISS]) des ID-Provider-Computersystems mit dem zweiten privaten Schlüssel, um ein weiteres Zertifikat zu bilden, wobei die Signatur des weiteren Zertifikats mit dem dritten Zertifikat verifiziert werden kann unter Verwendung des Root-Zertifikats des ersten HSM;
- wobei das ID-Provider-Computersystem konfiguriert ist zur:
• Authentifikation des ID-Provider-Computersystems gegenüber dem elektronischen Identitätsdokument durch Bereitstellung einer Zertifikatskette, die zumindest das dritte Zertifikat und das weitere Zertifikat enthält an das Identitätsdokument, um dem Identitätsdokument eine Prüfung zu ermöglichen, ob das ID-Provider-Computersystem eine Vertrauensstellung zum zweiten HSM und zum alten HSM hat.

## Claims

1. A method for migrating from a first hardware security module - HSM - (140; 101A) to a second HSM (101B) in order to allow an ID provider computer system to authenticate to an electronic identity document in which, during the course of personalisation, the root certificate of the first HSM was introduced as a trust anchor by means of the second HSM, wherein, during the migration, a private key of the first HSM does not need to be read, wherein the first HSM is assigned a first asymmetric cryptographic key pair having a first private key (142; 142A) and a first public key (147A) and a first certificate (144; 144A) containing the first public key, the method comprising the following steps:
- generating a second asymmetric cryptographic key pair with a second private key (142B) and a second public key (191 B) as well as a second certificate (190B) which contains the second public key, by the second HSM,
- transmitting the second certificate (190B) with the second public key from the second HSM to the first HSM, and
- generating a third certificate (144B) by the first HSM by signing the second public key with the first private key, wherein the third certificate assumes the function of a "cross certificate", wherein a certificate check of the public key of the second certificate may be carried out by means of a first certificate chain containing the first and third certificates;
- transferring the third certificate together with the signed second public key to the ID provider computer system or a certificate server,
- sending a certificate request with a public key of the ID provider computer system (pub[ISS]) from the ID provider computer system to the second HSM;
- signing the public key (pub[ISS]) of the ID provider computer system with the second private key by the second HSM in order to form a further certificate, wherein the signature of the further certificate with the third certificate may be verified using the root certificate of the first HSM;
- authenticating the ID provider computer system to the electronic identity document by providing a certificate chain containing at least the third certificate and the further certificate to the identity document in order to allow the identity document to check whether the ID provider computer system has a trust relationship to the second HSM and to the old HSM.

2. The method according to claim 1, further comprising:
- releasing trustworthy data to the ID provider computer system by the identity document if the identity document ascertains that the trust relationship is given.

3. The method according to claim 1, wherein the first HSM is replaced by the second HSM for performing cryptographic operations.

4. The method according to claim 1, wherein the second certificate is a self-signed root certificate which contains the second public key and has been signed by the associated second private key.

5. The method according to claim 1 or 2, wherein the third certificate is located within a certificate chain to the root certificate of the first certificate, and wherein said certificate chain is transferred, apart from the root certificate of the first HSM, likewise to the ID provider computer system or the directory server if this certificate chain is not already located there.

6. The method according to any one of the preceding claims, whereby a backup for the first HSM is created by the second HSM.

7. A method for reading at least one attribute stored in an identity document (106, 106'), wherein the identity document is assigned to a user (102), the method comprising the following steps:
- providing a first computer system, which includes a first HSM, wherein the first computer system is the ID provider computer system;
- carrying out the method for migration from a first HSM to a second HSM according to any one of claims 1-6, so that the first computer system includes the second HSM once the migration has been performed,
- authenticating the user to the identity document,
- authenticating the first computer system (136) to the identity document,
- following successful authentication of the user and the first computer system to the identity document, read access of the first computer system to the at least one attribute stored in the identity document for transmission of the at least one attribute, following its signing, to a second computer system (150), wherein the authentication is performed with the aid of the second HSM.

8. The method according to claim 7, comprising the following further steps:
- signing the at least one attribute read from the security document by the first computer system using the second HSM,
- transferring the signed attribute from the ID provider computer system to a second computer system.

9. The method according to claim 8, comprising the following further steps:
- sending a request (164) from a third computer system (100) to the second computer system,
- specifying one or more attributes by the second computer system,
- sending the attribute specification (166) from the second computer system to the first computer system,
wherein the read access of the first computer system takes place in order to read the one or more attributes specified in the attribute specification from the security document.

10. The method according to any one of preceding claims 7-9, wherein the first computer system has a plurality of the certificates (144.1; 144.2) with different read rights, wherein the first computer system selects at least one of the certificates having the reading rights sufficient to read the attributes specified in the attribute specification based on the receipt of the attribute specification.

11. The method according to any of preceding claims 7-10, wherein the third computer system has at least one configuration data set (161) specifying an external data source for retrieving a further attribute (A) from the third computer system via the network (116).

12. The method according to claim 11, wherein the retrieval of the further attribute occurs after the at least one attribute has been read from the ID token, and after the third computer system has received the at least one signed attribute from the first computer system, wherein the retrieval includes the at least one signed attribute.

13. The method according to any one of claims 1-12, wherein the second certificate is not a root certificate and a certificate check of the second certificate may be carried out by means of the first certificate chain and by means of a second certificate chain, wherein the second certificate chain contains the root certificate of the second HSM.

14. A computer program product comprising instructions executable by a computer system for carrying out a method according to any one of preceding claims 1-6.

15. A system comprising:
- an electronic identity document in which, during the course of the personalisation, the root certificate of a first hardware security module - HSM - (140; 101A) was introduced as a trust anchor;
- optionally a directory server;
- an ID provider computer system including a second HSM (101B), wherein the second HSM is the result of an HSM migration process from the first to the second HSM and serves as a replacement for the first HSM, in order to allow the ID provider computer system to authenticate to an electronic identity document by means of the second HSM,
- wherein the second HSM is configured for
• generating a second asymmetric cryptographic key pair with a second private (142B) and a second public key (191B) and also a second certificate (190B), which includes the second public key, by the second HSM,
• transferring the second certificate (190B) with the second public key from the second HSM to the first HSM, and
- wherein the second HSM or the optional directory server are configured for
• receiving a third certificate (144B) from the first HSM, wherein the third certificate contains a signature of the second public key generated with a first private key of the first HSM, wherein the third certificate assumes the function of a "cross certificate", wherein a certificate check of the public key of the second certificate may be carried out by means of a first certificate chain containing the first and third certificates, wherein the third certificate is received by means of the signed second public key;
- wherein the ID provider computer system is configured for:
• sending a certificate request with a public key of the ID provider computer system (pub[ISS]) to the second HSM;
- wherein the second HSM is configured for:
• signing the public key (pub[ISS]) of the ID provider computer system with the second private key in order to form a further certificate, wherein the signature of the further certificate with the third certificate may be verified using the root certificate of the first HSM;
- wherein the ID provider computer system is configured for:
• authenticating the ID provider computer system to the electronic identity document by providing a certificate chain containing at least the third certificate and the further certificate to the identity document in order to allow the identity document to check whether the ID provider computer system has a trust relationship to the second HSM and to the old HSM.

## Revendications

1. Procédé de migration depuis un premier module matériel de sécurité, ou HSM (140 ; 101A), vers un second HSM (101B) afin de permettre à un système informatique fournisseur d'ID de s'authentifier vis-à-vis d'un document d'identité électronique dans lequel, pendant le déroulement de la personnalisation, le certificat racine du premier HSM a été introduit en tant qu'ancrage de confiance au moyen du second HSM, dans lequel, pendant la migration, une clé privée du premier HSM n'a pas besoin d'être lue, dans lequel le premier HSM se voit attribuer une première paire de clés cryptographiques asymétriques ayant une première clé privée (142 ; 142A) et une première clé publique (147A) et un premier certificat (144 ; 144A) contenant la première clé publique, le procédé comprenant les étapes suivantes consistant à :
- faire générer une seconde paire de clés cryptographiques asymétriques avec une seconde clé privée (142B) et une seconde clé publique (191B) ainsi qu'un deuxième certificat (190B) qui contient la seconde clé publique, par le second HSM,
- transmettre le deuxième certificat (190B) avec la seconde clé publique du second HSM au premier HSM, et
- faire générer un troisième certificat (144B) par le premier HSM en signant la seconde clé publique avec la première clé privée, dans lequel le troisième certificat prend la fonction d'un « certificat croisé », dans lequel un contrôle de certificat de la clé publique du deuxième certificat peut être mis en œuvre au moyen d'une première chaîne de certificat contenant les premier et troisième certificats ;
- transférer le troisième certificat conjointement avec la seconde clé publique signée au système informatique fournisseur d'ID ou à un serveur de certificat,
- envoyer une requête de certificat avec une clé publique du système informatique fournisseur d'ID (pub[ISS]) depuis le système informatique fournisseur d'ID vers le second HSM ;
- signer la clé publique (pub[ISS]) du système informatique fournisseur d'ID avec la seconde clé privée par le second HSM afin de former un certificat supplémentaire, dans lequel la signature du certificat supplémentaire avec le troisième certificat peut être vérifiée en utilisant le certificat racine du premier HSM ;
- authentifier le système informatique fournisseur d'ID vis-à-vis du document d'identité électronique en fournissant une chaîne de certificat contenant au moins le troisième certificat et le certificat supplémentaire au document d'identité afin de permettre au document d'identité de contrôler si le système informatique fournisseur d'ID a une relation de confiance vis-à-vis du second HSM et de l'ancien HSM.

2. Procédé selon la revendication 1, comprenant en outre une étape consistant à :
- faire libérer des données dignes de confiance au système informatique fournisseur d'ID par le document d'identité si le document d'identité certifie que la relation de confiance est donnée.

3. Procédé selon la revendication 1, dans lequel le premier HSM est remplacé par le second HSM pour réaliser des opérations cryptographiques.

4. Procédé selon la revendication 1, dans lequel le deuxième certificat est un certificat racine auto-signé qui contient la seconde clé publique et a été signé par la seconde clé privée associée.

5. Procédé selon la revendication 1 ou 2, dans lequel le troisième certificat est situé au sein d'une chaîne de certificats vers le certificat racine du premier certificat, et dans lequel ladite chaîne de certificats est transférée, séparément du certificat racine du premier HSM, de la même façon au système informatique fournisseur d'ID ou au serveur de répertoire si cette chaîne de certificat n'est pas déjà située à cet endroit.

6. Procédé selon l'une quelconque des revendications précédentes, moyennant quoi une sauvegarde pour le premier HSM est créée par le second HSM.

7. Procédé de lecture d'au moins un attribut stocké dans un document d'identité (106, 106'), dans lequel le document d'identité est attribué un utilisateur (102), le procédé comprenant les étapes suivantes consistant à :
- fournir un premier système informatique, qui inclut un premier HSM, dans lequel le premier système informatique est le système informatique fournisseur d'ID ;
- mettre en œuvre le procédé de migration depuis un premier HSM vers un second HSM selon l'une quelconque des revendications 1 à 6, de telle sorte que le premier système informatique inclut le second HSM une fois que la migration a été réalisée,
- authentifier l'utilisateur vis-à-vis du document d'identité,
- authentifier le premier système informatique (136) vis-à-vis du document d'identité,
- après l'authentification réussie de l'utilisateur et du premier système informatique vis-à-vis du document d'identité, faire accéder en lecture le premier système informatique à l'au moins un attribut stocké dans le document d'identité pour transmission de l'au moins un attribut, après sa signature, à un deuxième système informatique (150), dans lequel l'authentification est réalisée à l'aide du second HSM.

8. Procédé selon la revendication 7, comprenant les étapes supplémentaires suivantes consistant à :
- signer l'au moins un attribut lu depuis le document de sécurité par le premier système informatique en utilisant le second HSM,
- transférer l'attribut signé depuis le système informatique fournisseur d'ID vers un deuxième système informatique.

9. Procédé selon la revendication 8, comprenant les étapes supplémentaires suivantes consistant à :
- envoyer une requête (164) depuis un troisième système informatique (100) vers le deuxième système informatique,
- faire spécifier un ou plusieurs attributs par le deuxième système informatique,
- envoyer la spécification d'attribut (166) depuis le deuxième système informatique vers le premier système informatique, dans lequel l'accès en lecture du premier système informatique a lieu afin de lire le ou les attributs spécifiés dans la spécification d'attribut depuis le document de sécurité.

10. Procédé selon l'une quelconque des revendications 7 à 9 précédentes, dans lequel le premier système informatique a une pluralité des certificats (144.1 ; 144.2) avec différents droits de lecture, dans lequel le premier système informatique choisit au moins l'un des certificats ayant les droits de lecture suffisants pour lire les attributs spécifiés dans la spécification d'attribut en se basant sur le reçu de la spécification d'attribut.

11. Procédé selon l'une quelconque des revendications 7 à 10 précédentes, dans lequel le troisième système informatique a au moins un ensemble de données de configuration (161) spécifiant une source de données externes pour récupérer un attribut (A) supplémentaire depuis le troisième système informatique par l'intermédiaire du réseau (116).

12. Procédé selon la revendication 11, dans lequel la récupération de l'attribut supplémentaire se produit après que l'au moins un attribut a été lu depuis le jeton d'ID, et après que le troisième système informatique a reçu l'au moins un attribut signé depuis le premier système informatique, dans lequel la récupération inclut l'au moins un attribut signé.

13. Procédé selon l'une quelconque des revendications 1 à 12, dans lequel le deuxième certificat n'est pas un certificat racine et un contrôle de certificat du deuxième certificat peut être mis en œuvre au moyen de la première chaîne de certificat et au moyen d'une seconde chaîne de certificat, dans lequel la seconde chaîne de certificat contient le certificat racine du second HSM.

14. Produit de programme informatique comprenant des instructions exécutables par un système informatique pour mettre en œuvre un procédé selon l'une quelconque des revendications 1 à 6 précédentes.

15. Système comprenant :
- un document d'identité électronique dans lequel, au cours de la personnalisation, le certificat racine d'un premier module matériel de sécurité, ou HSM (140 ; 101A), a été introduit en tant qu'ancrage de confiance ;
- éventuellement un serveur de répertoire ;
- un système informatique fournisseur d'ID incluant un second HSM (101B), dans lequel le second HSM est le résultat d'un processus de migration de HSM depuis le premier vers le second HSM et sert de remplacement au premier HSM, afin de permettre au système informatique fournisseur d'ID de s'authentifier vis-à-vis d'un document d'identité électronique au moyen du second HSM,
- dans lequel le second HSM est configuré pour
• faire générer une seconde paire de clés cryptographiques asymétriques avec une seconde clé privée (142B) et une seconde clé publique (191B), et également un deuxième certificat (190B), qui inclut la seconde clé publique, par le second HSM,
• transférer le deuxième certificat (190B) avec la seconde clé publique du second HSM au premier HSM, et
- dans lequel le second HSM ou le serveur de répertoire éventuel sont configurés pour
• - recevoir un troisième certificat (144B) depuis le premier HSM, dans lequel le troisième certificat contient une signature de la seconde clé publique générée avec une première clé privée du premier HSM, dans lequel le troisième certificat prend la fonction d'un « certificat croisé », dans lequel un contrôle de certificat de la clé publique du deuxième certificat peut être mis en œuvre au moyen d'une première chaîne de certificats contenant les premier et troisième certificats, dans lequel le troisième certificat est reçu au moyen de la seconde clé publique signée ;
- dans lequel le système informatique fournisseur d'ID est configuré pour :
• envoyer une requête de certificat avec une clé publique du système informatique fournisseur d'ID (pub[ISS]) vers le second HSM ;
- dans lequel le second HSM est configuré pour :
• - signer la clé publique (pub[ISS]) du système informatique fournisseur d'ID avec la seconde clé privée afin de former un certificat supplémentaire, dans lequel la signature du certificat supplémentaire avec le troisième certificat peut être vérifiée en utilisant le certificat racine du premier HSM ;
- dans lequel le système informatique fournisseur d'ID est configuré pour :
• authentifier le système informatique fournisseur d'ID vis-à-vis du document d'identité électronique en fournissant une chaîne de certificats contenant au moins le troisième certificat et le certificat supplémentaire vis-à-vis du document d'identité afin de permettre au document d'identité de contrôler si le système informatique fournisseur d'ID a une relation de confiance vis-à-vis du second HSM et de l'ancien HSM.
